(19) Europäisches Patentamt
European Patent Office
Office européen des brevets

(11) EP 4 372 027 A1

(12) **EUROPEAN PATENT APPLICATION**

(43) Date of publication:
**22.05.2024 Bulletin 2024/21**

(21) Application number: **22207591.3**

(22) Date of filing: **15.11.2022**

(51) International Patent Classification (IPC):
***C08G 65/26*** *(2006.01)* ***C08G 65/333*** *(2006.01)*

(52) Cooperative Patent Classification (CPC):
**C08G 65/2609; C08G 65/33303; C08G 65/33306**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Johannes Gutenberg-Universität Mainz**
**55122 Mainz (DE)**

(72) Inventors:
- **Frey, Holger**
  **55128 Mainz (DE)**
- **Matthes, Rebecca**
  **55128 Mainz (DE)**
- **Dreier, Philip**
  **55128 Mainz (DE)**

(74) Representative: **Durm Patentanwälte PartG mbB**
**Patentanwälte**
**Moltkestrasse 45**
**76133 Karlsruhe (DE)**

(54) **USE OF POLYETHYLENOXIDE POLYMERS FOR THE PREPARATION OF LIPIDS CONJUGATED WITH POLY(ETHYLENE OXIDE) HAVING C1 TO C3-ALKYLOXYMETHYL SIDE CHAINS**

(57) The present invention refers to the use of novel polyoxyalkylene based compounds for the preparation of lipids and compositions comprising at least one novel polyoxyalkylene based compound and at least one active agent. Preferably the compounds and compositions are used as novel lipids, preferably in lipid particles or lipid nanoparticles and in pharmaceutical compositions. Furthermore, the present invention refers to the manufacture of the compositions of the present invention as well as their use for the treatment of an illness in mammals or humans. The compositions are suitable as a delivery vehicle for at least one active agent, in particular to facilitate intracellular delivery of therapeutic nucleic acids.

EP 4 372 027 A1

## Description

### Background

#### Technical Field

The present invention refers to the use of novel polyoxyalkylene based compounds for the preparation of lipids and compositions comprising at least one novel polyoxyalkylene based compound and at least one active agent. In particular, the compounds are suitable as novel lipids that can be used in compositions suitable as lipid nanoparticles which can optionally contain other lipid components. The compositions are suitable as a delivery vehicle for at least one active agent, in particular to facilitate intracellular delivery of therapeutic nucleic acids.

Lipids based on polyethylene oxide (PEO) are an important class of excipients. Early publications of such lipids include Frisch et.al, Bioconjugate Chemistry (2004), 15(4), 754-764. They are used in lipid nanoparticle formulations for example in vaccines against Covid-19. Main function of PEO is the so-called "stealth effect" that avoids recognition by the patient's reticuloendothelial system. A major concern of PEO is the immune response of the patient's body that can lead to the formation of anti-PEO antibodies, as for example disclosed in J. Selva et al., ACS Nano (2022), 16(8), 11769-11780. Anti-PEO antibodies can cause the loss of the desired "stealth effect", the loss of functionality of the drug, and allergic reactions.

Therefore, alternative compounds are required, which possess the "stealth effect" but exhibit less or no formation of antibodies, i.e., immunogenic potential.

The inventors of the present invention have surprisingly found that the above-mentioned object can be solved by the specific polyoxyalkylene based compounds according to the present invention, which possess a polyoxyalkylene unit different from PEO. Furthermore, the obtained compounds surprisingly show better storage stability compared to similar common PEO lipids.

As used herein, the following terms have the meanings ascribed to them unless specified otherwise.

Unless the context requires otherwise, throughout the present specification and claims, the word "comprise" and variations thereof, such as, "comprises", "comprising", "contain", and "containing" are to be construed in an open and inclusive sense, that is, as "including, but not limited to".

Unless defined otherwise, all technical and scientific terms used herein have the same meaning as is commonly understood by one of skill in the art. As used in the specification and claims, the singular form "a", "an" and "the" include plural references unless the context clearly dictates otherwise.

Numerical ranges that are indicated in the format "from x to y" also include the stated values. If several preferred numerical ranges are indicated in this format, it is self-evident that all ranges that result from the combination of the various endpoints are also included.

"One or more", as used herein, relates to at least one and comprises 1, 2, 3, 4, 5, 6, 7, 8, 9 or more of the referenced species. Similarly, "at least one" means one or more, i.e., 1, 2, 3, 4, 5, 6, 7, 8, 9 or more. "At least one", as used herein in relation to any component, refers to the number of chemically different molecules, i.e. to the number of different types of the referenced species, but not to the total number of molecules. For example, "at least one therapeutic agent" means that at least one type of molecule falling within the definition for a therapeutic agent is used but that also two or more different types of therapeutic agents falling within this definition can be present, but does not mean that only one or more molecules of one type of therapeutic agents are present.

All percentages given herein in relation to the compositions relate to wt.-% relative to the total weight of the respective composition, if not explicitly stated otherwise.

"Essentially free of" according to the present invention with regard to compounds means that the compound can only be present in an amount, which does not influence the characteristics of the composition, in particular the respective compound is present in less than 3 wt.-%, preferably 1 wt.-%, more preferably 0.01 wt.-%, based on the total weight of the composition or is not present at all.

The term "nucleic acid(s)" as used herein refers to a compound(s) containing at least two deoxyribonucleotides or ribonucleotides in either single- or double- or triple-stranded form and includes DNA, RNA, and hybrids thereof. DNA may be in the form of antisense molecules, plasmid DNA (pDNA), linear or circular DNA, PCR products, or vectors. RNA may be in the form of self-amplifying RNA (saRNA) or small hairpin RNA (shRNA), small interfering RNA (siRNA), chemically modified or unmodified messenger RNA (mRNA), antisense RNA, circular RNA (circRNA) comprising at least one coding sequence, micro RNA (miRNA), micRNA, multivalent RNA, transfer RNA (tRNA), single guided RNA (sgRNA), replicating RNA (repRNA), dicer substrate RNA or viral RNA (vRNA), antisense oligonucleotide (ASO), double-stranded RNA (dsRNA) and combinations thereof. Nucleic acids include nucleic acids containing known nucleotide analogs or modified backbone residues or linkages, which are synthetic, naturally occurring, and non-naturally occurring, and which have similar binding properties as the reference nucleic acid. Examples of such analogs include, without limitation, phosphorothioates, phosphoramidates, methyl phosphonates, chiral-methyl phosphonates, 2'-O-methyl ribonucleotides,

and peptide-nucleic acids (PNAs). Unless specifically limited, the term encompasses nucleic acids containing known analogues of natural nucleotides that have similar binding properties as the reference nucleic acid. Unless otherwise indicated, a particular nucleic acid sequence also implicitly encompasses conservatively modified variants thereof (e.g., degenerate codon substitutions), alleles, orthologs, single nucleotide polymorphisms, and complementary sequences as well as the sequence explicitly indicated.

The term "lipid" refers to a group of organic compounds that include, but are not limited to, esters of fatty acids and are generally characterized by being poorly soluble in water, but soluble in many organic solvents. They are usually divided into at least three classes: (1) "simple lipids," which include fats and oils as well as waxes; (2) "compound lipids," which include phospholipids and glycolipids; and (3) "derived lipids" such as steroids.

A "cationic lipid" refers to a lipid capable of being positively charged. Exemplary cationic lipids include one or more amine group(s) which bear the positive charge. Preferred cationic lipids are ionizable such that they can exist in a positively charged or neutral form depending on pH. The ionization of the cationic lipid affects the surface charge of the lipid nanoparticle under different pH conditions.

The term "neutral lipid" refers to any of a number of lipid species that exist either in an uncharged or neutral zwitterionic form at a selected pH value.

The term "ionizable lipid" refers to any of a number of lipid species that exist in either a positively charged or negatively charged form independent of the pH within a useful physiological range, e.g., pH ~3 to pH ~9. Ionizable lipids may be synthetic or naturally derived.

An "effective amount" or "therapeutically effective amount" of an active agent such as a nucleic acid is an amount sufficient to produce the desired effect, e.g., an increase or inhibition of expression of a target sequence in comparison to the normal expression level detected in the absence of the nucleic acid. An increase in expression of a target sequence is achieved when any measurable level is detected in the case of an expression product that is not present in the absence of the nucleic acid. In the case where the expression product is present at some level prior to contact with the nucleic acid, an in increase in expression is achieved when the fold increase in value obtained with a nucleic acid such as mRNA relative to control is about 1.05, 1.1, 1.2, 1.3, 1.4, 1.5, 1.75, 2, 2.5, 3, 4, 5, 6, 7, 8, 9, 10, 15, 20, 25, 30, 40, 50, 75, 100, 250, 500, 750, 1000, 5000, 10000, or greater.

Inhibition of expression of a target gene or target sequence is achieved when the value obtained with a nucleic acid such as antisense oligonucleotide relative to the control is about 95%, 90%, 85%, 80%, 75%, 70%, 65%, 60%, 55%, 50%, 45%, 40%, 35%, 30%, 25%, 20%, 15%, 10%, 5%, or 0%. Suitable assays for measuring expression of a target gene or target sequence include, e.g., examination of protein or RNA levels using techniques known to those of skill in the art such as dot blots, northern blots, in situ hybridization, ELISA, immunoprecipitation, enzyme function, fluorescence, or luminescence of suitable reporter proteins, as well as phenotypic assays known to those of skill in the art.

The disclosure disclosed herein is also meant to encompass all pharmaceutically acceptable compounds of the compound of formula (I) being their pharmaceutically acceptable salt and/or being isotopically labelled by having one or more atoms replaced by an atom having a different atomic mass or mass number. Examples of isotopes that can be incorporated into the disclosed compounds include isotopes of hydrogen, carbon, nitrogen, oxygen, phosphorous, fluorine, chlorine, and iodine.

Embodiments disclosed herein are also meant to encompass the in vivo metabolic products of the compounds according to the present invention. Such products may result from, for example, the oxidation, reduction, hydrolysis, amidation, esterification, and the like of the administered compound, primarily due to enzymatic processes. Accordingly, embodiments of the disclosure include compounds produced by a process comprising administering a compound of this disclosure to a mammal for a period of time sufficient to yield a metabolic product thereof.

The compounds of the present invention including their pharmaceutically acceptable salts may contain one or more stereocenters and may thus give rise to enantiomers, diastereomers, and other stereoisomeric forms that may be defined, in terms of absolute stereochemistry, as (R)- or (S)- or, as (D)- or (L)- for amino acids. The present invention is meant to include all such possible isomers, as well as their racemic and optically pure forms. Optically active (+) and (- ), (R)- and (S)-, or (D)- and (L)- isomers may be prepared using chiral synthons or chiral reagents, or resolved using conventional techniques, for example, chromatography and fractional crystallization. Conventional techniques for the preparation/isolation of individual enantiomers include chiral synthesis from a suitable optically pure precursor or resolution of the racemate (or the racemate of a salt or derivative) using, for example, chiral high pressure liquid chromatography (HPLC). When the compounds described herein contain olefinic double bonds or other centers of geometric asymmetry, and unless specified otherwise, it is intended that the compounds include both E and Z geometric isomers. Likewise, all tautomeric forms are also intended to be included.

A "stereoisomer" refers to a compound made up of the same atoms bonded by the same bonds but having different three-dimensional structures, which are not interchangeable. The present invention contemplates various stereoisomers and mixtures thereof and includes "enantiomers", which refers to two stereoisomers whose molecules are non-superimposable mirror images of one another.

A "tautomer" refers to a proton shift from one atom of a molecule to another atom of the same molecule. The

present disclosure includes tautomers of any said compounds.

"Pharmaceutically acceptable salt" includes both acid and base addition salts.

"Pharmaceutically acceptable acid addition salt" refers to those salts which retain the biological effectiveness and properties of the free bases, which are not biologically or otherwise undesirable, and which are formed with inorganic acids such as, but are not limited to, hydrochloric acid, hydrobromic acid, sulfuric acid, nitric acid, phosphoric acid and the like, and organic acids such as, but not limited to, acetic acid, 2,2-dichloroacetic acid, adipic acid, alginic acid, ascorbic acid, aspartic acid, benzenesulfonic acid, benzoic acid, 4-acetamidobenzoic acid, camphoric acid, camphor-10-sulfonic acid, capric acid, caproic acid, caprylic acid, carbonic acid, cinnamic acid, citric acid, cyclamic acid, dodecylsulfuric acid, ethane- 1,2-disulfonic acid, ethanesulfonic acid, 2-hydroxyethanesulfonic acid, formic acid, fumaric acid, galactaric acid, gentisic acid, glucoheptonic acid, gluconic acid, glucuronic acid, glutamic acid, glutaric acid, 2-oxo-glutaric acid, glycerophosphoric acid, glycolic acid, hippuric acid, isobutyric acid, lactic acid, lactobionic acid, lauric acid, maleic acid, malic acid, malonic acid, mandelic acid, methanesulfonic acid, mucic acid, naphthalene-1,5-disulfonic acid, naphthalene-2-sulfonic acid, 1-hydroxy-2-naphthoic acid, nicotinic acid, oleic acid, orotic acid, oxalic acid, palmitic acid, pamoic acid, propionic acid, pyroglutamic acid, pyruvic acid, salicylic acid, 4-aminosalicylic acid, sebacic acid, stearic acid, succinic acid, tartaric acid, thiocyanic acid, / toluenesulfonic acid, trifluoroacetic acid, undecylenic acid, and the like.

## Summary of the invention

Therefore, in a first aspect the present invention refers to the use of a polyoxyalkylene polymer A or a compound of the formula H-O-A-$R^2$ or a compound of the formula H-O-$CH_2$-$CH_2$-O-A-$R^2$ for the preparation of a compound having following formula (I)

$$R^1{}_nL\text{-}A\text{-}R^2 \qquad (I)$$

wherein n is 1 or 2;

$R^1$ are independently from each other selected from saturated or unsaturated with up to three -C=C- bonds, branched or straight-chain $C_3$-$C_{20}$ hydrocarbon groups;

L is a linker unit,

A is a polyoxyalkylene group comprising a unit

(a)

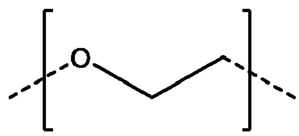

and at least one unit selected from

(b)

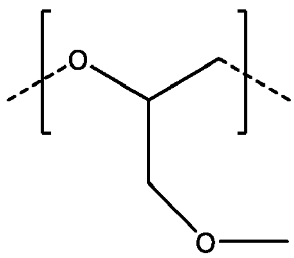

,

(c)

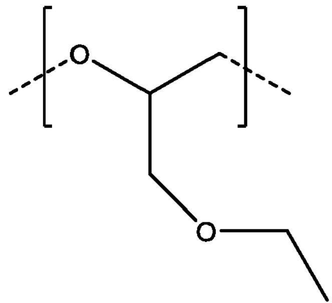

,

(d)

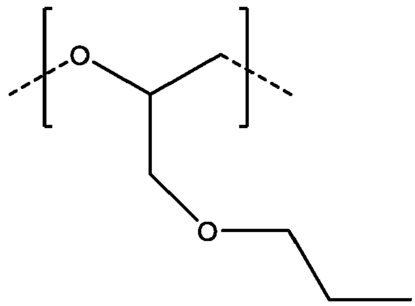

, and

(e)

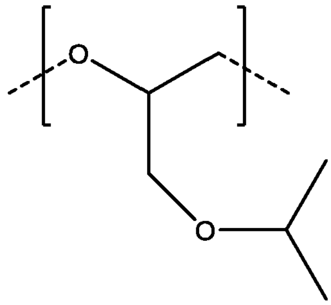

;

and

$R^2$ is selected from -H; -OH; -SH; $-NH_2$; $-NHR^3$, $-NR^3R^4$, $-OR^5$, $-SR^5$ or linear, branched or cyclic alkyl groups having up to 20 carbon atoms; wherein $R^3$ to $R^5$ are independently selected from linear, branched or cyclic alkyl groups having up to 20 carbon atoms, in which up to 5 carbon atoms can be replaced by an oxygen or a sulfur atom; and

wherein $-A-R^2$ has a molecular weight of 1100 to 7500 g/mol.

In a second aspect the present invention pertains to the use of a polyoxyalkylene polymer A or a compound of the formula $H-O-A-R^2$ or a compound of the formula $H-O-CH_2-CH_2-O-A-R^2$ for the preparation a composition comprising at least one compound of formula (I) according to the present invention and at least one active agent.

In a third aspect the present invention refers to the use of the present invention, wherein the compound of formula (I) is produced by a method

a) comprising or consisting of the steps:

i) providing a precursor compound selected from the group consisting of $H-O-A-R^2$ and $H-O-CH_2-CH_2-O-A-R^2$, wherein A and $R^2$ are as defined in formula (I), and

ii) replacing -H of the hydroxyl group of $H-O-A-R^2$ or $H-O-CH_2-CH_2-O-A-R^2$, respectively, by a group that forms together with the oxygen atom, -H is bound to, a leaving group -X, which is able to undergo a substitution reaction; and

iii) thereafter performing a substitution reaction with $H-LR^1_n$ to substitute -X with $-LR^1_n$, wherein L, n and $R^1$ are as defined as in formula (I);
or

b) comprising or consisting of the steps:

i) providing a precursor compound selected from the group consisting of $H-O-A-R^2$ and $H-O-CH_2-CH_2-O-A-R^2$, wherein A and $R^2$ are as defined as in formula (I), and

ii) replacing -H of the hydroxyl group of $H-O-A-R^2$ or $H-O-CH_2-CH_2-O-A-R^2$, respectively, by a group that forms together with the oxygen atom, -H is bound to, a leaving group -X, which is able to undergo a substitution reaction; and

iii) thereafter performing a substitution reaction with H-L to substitute -X with -L, wherein L is as defined as in formula (I) and L comprises one or two groups selected from the group consisting of hydroxyl group and carboxyl group, and

iv) L is subsequently further chemically modified by an esterification reaction with the hydroxyl group(s) and/or carboxyl group(s) to introduce $-R^1$; under formation of an ester bond;
or

c) comprising or consisting of the steps:

i) providing a precursor compound $H-O-CH_2-CH_2-O-A-R^2$, wherein A and $R^2$ are as defined as in formula (I), and

ii) oxidizing the precursor, in order to form a compound $HOOC-CH_2-O-A-R^2$;

iii) thereafter performing an esterification reaction, and preferably a condensation reaction with $H-LR^1_n$, wherein L, n and $R^1$ are as defined in formula (I);
or

d) comprising or consisting of the steps:

i) providing a precursor compound $H-O-CH_2-CH_2-O-A-R^2$, wherein A and $R^2$ are as defined in formula (I), and

ii) oxidizing the precursor, in order to form a compound $HOOC-CH_2-O-A-R^2$;

iii) thereafter performing an esterification reaction and preferably a condensation reaction with H-L, wherein L is as defined in formula (I), and L in H-L comprises one or two groups selected from the group consisting of hydroxyl group and carboxyl group;

iv) L is subsequently further chemically modified by an esterification reaction with the hydroxyl group and carboxyl group to introduce $-R^1$.

In a fourth aspect the present invention refers to the use of the present invention for the preparation of a composition by a method for the production of a composition according to the present invention, comprising the steps of providing at least one compound of formula (I) according to the present invention, at least one active agent and optionally further ingredients; and combining all ingredient to obtain a composition according to the present invention.
In a fifth aspect the present invention refers to the use of a polyoxyalkylene polymer A or a compound of the formula $H-O-A-R^2$ or a compound of the formula $H-O-CH_2-CH_2-O-A-R^2$ for the preparation of a lipid. In a sixth aspect the present invention refers to the use of a polyoxyalkylene polymer A or a compound of the formula $H-O-A-R^2$ or a

compound of the formula $H\text{-}O\text{-}CH_2\text{-}CH_2\text{-}O\text{-}A\text{-}R^2$ for the preparation of a nanoparticle.

**Description of the Figures**

**Fig. 1a:** AGE of LNPs formulated with different PEO/GME-lipids. M: RNA Ladder; 1, 2: free FLuc mRNA, 4: l (8); 5: h (8); 6: g (8); 7: j (7); 8: i (8).
**Fig. 1b:** 1: AGE of LNPs formulated with different PEO/GME-lipids. 1: free FLuc mRNA, 2: PEO2k-DMG LNP, 3: m(11)
**Fig. 2:** Transfection efficiency of LNPs formulated with different PEG/GME-lipids as assessed by luciferase assay in different cell lines.
**Fig. 3:** ELISA assay

**Detailed description**

These and other aspects, embodiments, features, and advantages of the invention will become apparent to a person skilled in the art through the study of the following detailed description and claims. Any feature from one aspect of the invention can be used in any other aspect of the invention. Furthermore, it will readily be understood that the examples contained herein are intended to describe and illustrate the invention but not to limit the invention. In particular, the invention is not limited to these examples.
The invention in particular refers to the use of a polyoxyalkylene polymer A or a compound of the formula $H\text{-}O\text{-}A\text{-}R^2$ or a compound of the formula $H\text{-}O\text{-}CH_2\text{-}CH_2\text{-}O\text{-}A\text{-}R^2$ for the preparation of a lipid and especially for the preparation of a compound having following formula (I)

$$R^1{}_nL\text{-}A\text{-}R^2 \qquad (I)$$

wherein n is 1 or 2;

$R^1$ are independently from each other selected from saturated or unsaturated with up to three -C=C- bonds, branched or straight-chain $C_3$-$C_{20}$ hydrocarbon groups;

L is a linker unit,

A is a polyoxyalkylene group comprising a unit

(a)

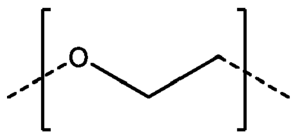

and at least one unit selected from

(b)

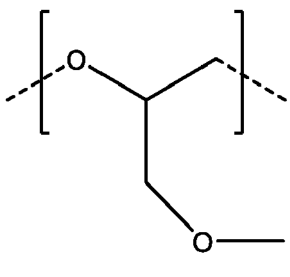

,

(c)

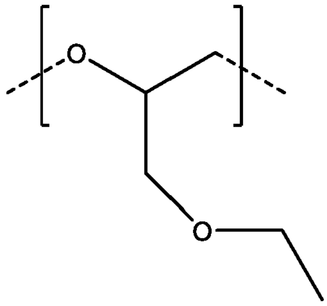

,

(d)

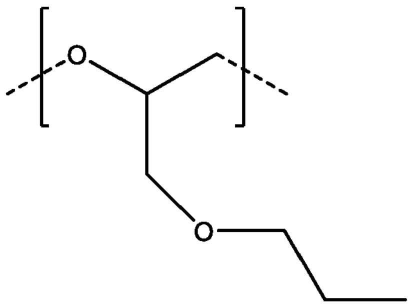

,

and

(e)

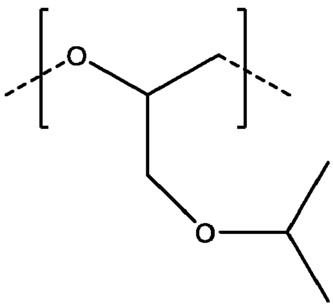

;

and

$R^2$ is selected from -H; -OH; -SH; $-NH_2$; $-NHR^3$, $-NR^3R^4$, $-OR^5$, $-SR^5$ or linear, branched or cyclic alkyl groups having up to 20 carbon atoms; wherein

$R^3$ to $R^5$ are independently selected from linear, branched or cyclic alkyl groups having up to 20 carbon atoms, in which up to 5 carbon atoms can be replaced by an oxygen or a sulfur atom; and

wherein $-A-R^2$ has a molecular weight of 1100 to 7500 g/mol.

The molecular weight can either be the calculated theoretical molecular weight of $-A-R^3$ as done in the field of chemistry, for example the unit

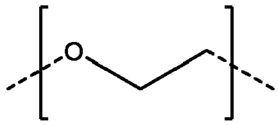

has a theoretical molecular weight of 44 g/mol and the unit

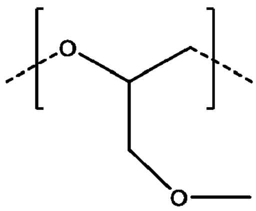

has a theoretical molecular weight of 88 g/mol, wherein values are rounded to integers. Alternatively, the molecular weight can be the weight average molecular weight determined by measuring the weight average molecular weight of the precursor H-A-$R^3$ via size-exclusion chromatography and deducting the theoretical molecular weight of either -H (1 g/mol; method (i)) or -$C_2H_4OH$ (46 g/mol; method (ii)), taking into account the actual reaction mechanism as described below. The size-exclusion chromatography can preferably be performed with dimethylformamide (DMF with 1 g/L LiBr) as the mobile phase (flow rate 1 mL/min) on poly(2-hydroxyethylmethacrylat) (PHEMA) 300/100/40 columns at 50 °C. Polymer concentrations were 1 mg/mL. Calibration was carried out using poly(ethylene glycol) standards (from Polymer Standard Service, Mainz, Germany).

The unit L is bound to an oxygen atom of the polyoxyalkylene group A, in particular the oxygen atom is a terminal oxygen atom of the polyoxyalkylene group A. Unit L is any divalent or trivalent unit, preferably suitable for pharmaceutical applications and able to provide a compound of formula (I), which is a lipid.

The compound of formula (I) is suitable as a lipid.

In one embodiment $R^1$ and $R^2$ are independently selected from each other from saturated or unsaturated with up to two -C=C- bonds, branched or straight-chain $C_4$-$C_{20}$ hydrocarbon groups or -H.

In one embodiment $R^1$ and $R^2$ are independently selected from each other from saturated or unsaturated with up to two -C=C- bonds, straight-chain $C_4$-$C_{20}$ hydrocarbon groups or -H.

In one embodiment $R^1$ and $R^2$ are independently selected from each other from saturated or unsaturated with one -C=C- bond, branched or straight-chain $C_4$-$C_{20}$ hydrocarbon groups or - H.

In one embodiment $R^1$ and $R^2$ are independently selected from each other from saturated or unsaturated with one -C=C- bond, straight-chain $C_4$-$C_{20}$ hydrocarbon groups or -H.

In one embodiment $R^1$ and $R^2$ are independently selected from each other from saturated branched or straight-chain $C_4$-$C_{20}$ hydrocarbon groups or -H.

In one embodiment $R^1$ and $R^2$ are independently selected from each other from saturated straight-chain $C_4$-$C_{20}$ hydrocarbon groups or -H.

In one embodiment $R^1$ and $R^2$ are independently selected from each other from saturated or unsaturated with up to two -C=C- bonds, branched or straight-chain $C_8$-$C_{18}$ hydrocarbon groups or -H.

In one embodiment $R^1$ and $R^2$ are independently selected from each other from saturated or unsaturated with up to two -C=C- bonds, straight-chain $C_8$-$C_{18}$ hydrocarbon groups or -H.

In one embodiment $R^1$ and $R^2$ are independently selected from each other from saturated or unsaturated with one -C=C- bond, branched or straight-chain $C_8$-$C_{18}$ hydrocarbon groups or - H.

In one embodiment $R^1$ and $R^2$ are independently selected from each other from saturated or unsaturated with one -C=C- bond, straight-chain $C_8$-$C_{18}$ hydrocarbon groups or -H.

In one embodiment $R^1$ and $R^2$ are independently selected from each other from saturated branched or straight-chain $C_8$-$C_{18}$ hydrocarbon groups or -H.

In one embodiment $R^1$ and $R^2$ are independently selected from each other from saturated straight-chain $C_8$-$C_{18}$ hydrocarbon groups or -H.

In one embodiment $R^1$ and $R^2$ are independently selected from each other from saturated or unsaturated with up to two -C=C- bonds, branched or straight-chain $C_{12}$-$C_{17}$ hydrocarbon groups or -H.

In one embodiment $R^1$ and $R^2$ are independently selected from each other from saturated or unsaturated with up to two -C=C- bonds, straight-chain $C_{12}$-$C_{17}$ hydrocarbon groups or -H.

In one embodiment $R^1$ and $R^2$ are independently selected from each other from saturated or unsaturated with one -C=C- bond, branched or straight-chain $C_{12}$-$C_{17}$ hydrocarbon groups or -H.

In one embodiment $R^1$ and $R^2$ are independently selected from each other from saturated or unsaturated with one -C=C- bond, straight-chain $C_{12}$-$C_{17}$ hydrocarbon groups or -H.

In one embodiment $R^1$ and $R^2$ are independently selected from each other from saturated branched or straight-chain $C_{12}$-$C_{17}$ hydrocarbon groups or -H.

In one embodiment $R^1$ and $R^2$ are independently selected from each other from saturated straight-chain $C_{12}$-$C_{17}$ hydrocarbon groups or -H.

In one embodiment $R^1$ and $R^2$ are independently selected from each other from saturated straight-chain $C_{12}$-$C_{14}$ hydrocarbon groups or -H.

In one preferred embodiment $R^1$ and $R^2$ are the same.

In one preferred embodiment $R^1{}_nL$- is selected from the group consisting of

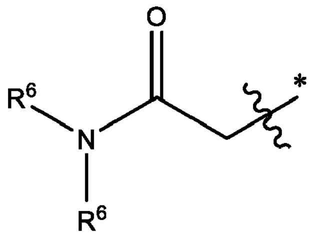

(L1),

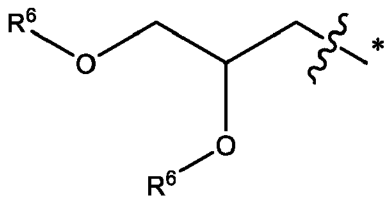

(L2),

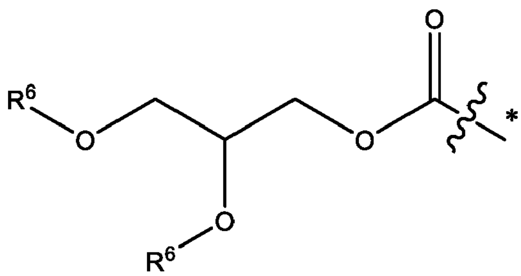

(L3),

wherein in (L1) to (L3) $R^6$ is - H or $R^1$ and at least one $R^6$ is $R^1$,

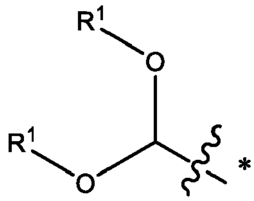

(L4),

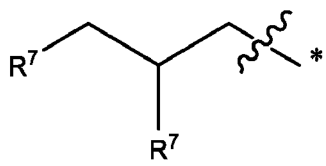

(L5),

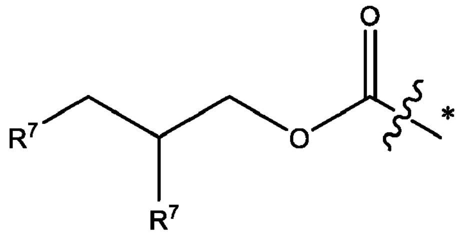
(L6),

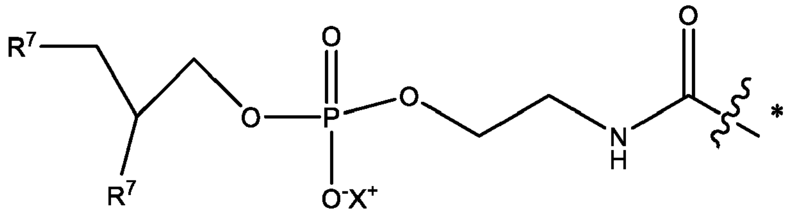
(L7),

wherein in (L5) to (L7) $R^7$ is -H, -OH or $R^1COO$- and at least one $R^7$ is $R^1COO$-, and in (L7) $X^+$ is an alkali metal cation;

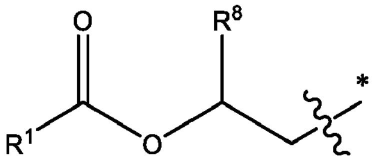
(L8),
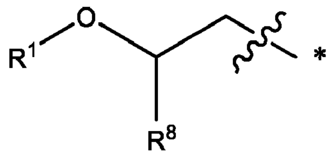
(L9),

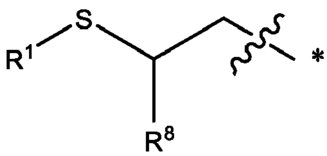
(L10),

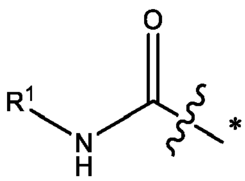
(L11),
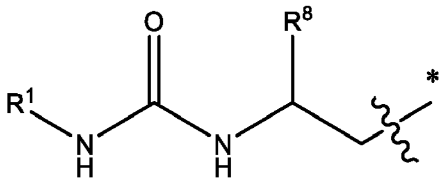
(L12),

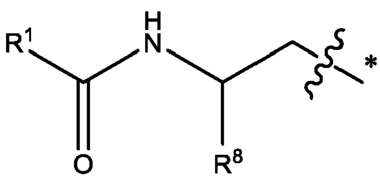
(L13),
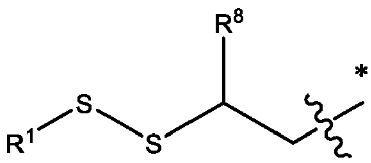
(L14),

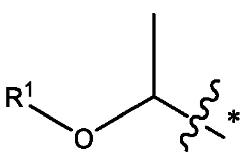
(L15),
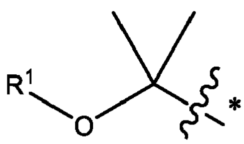
(L16),

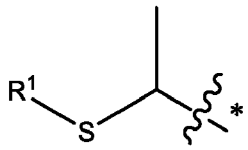 (L17), 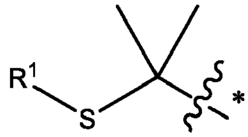 (L18),

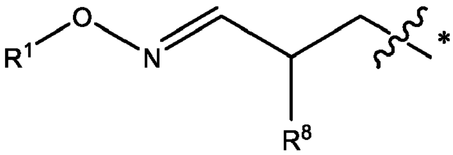 (L19), 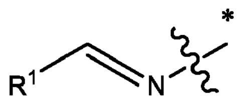 (L20),

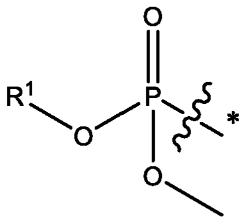 (L21), and 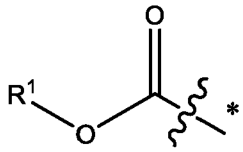 (L22),

wherein $R^8$ is -H, -$CH_2OC_{1-20}$ hydrocarbon group with up to 3 unsaturated double bonds, preferably -H or -$CH_2OC_{1-20}$alkyl, more preferably - $CH_2OC_{1-5}$alkyl, and most preferably $R^8$ is selected from the group consisting of -H, methoxymethyl, ethoxymethyl, n-propoxymethyl and iso-propoxymethyl,

and wherein in (L1) to (L22) the bond marked with * is bound to a terminal oxygen atom of the polyoxyalkylene group A.

In one preferred embodiment $R^1{}_nL$- is selected from (L1), (L5) or (L7), wherein in (L5) and (L7) both residues $R^7$ are $R^1COO$- and in (L7) $X^+$ is sodium or potassium.

In one more preferred embodiment $R^1{}_nL$- is selected from (L1) or (L5), wherein in (L5) both residues $R^7$ are $R^1COO$-.

In one preferred embodiment $R^1{}_nL$- is (L1).

In one preferred embodiment $R^1{}_nL$- is (L5), wherein in (L5) both residues $R^7$ are $R^1COO$-.

In one embodiment the compound of formula (I) is of following formula (Ia)

$$R^1{}_nL\text{-}CO\text{-}CH_2\text{-}A\text{-}R^2 \qquad \text{(Ia)}$$

wherein n is 2 and the residues $R^1$ are independently from each other selected from saturated straight-chain $C_{12-18}$, preferably $C_{12-16}$, more preferably $C_{12-14}$, hydrocarbon groups; preferably $R^1$ and $R^2$ are the same; most preferably are $C_{14}$ hydrocarbon groups; and

$R^2$ is -$OR^5$, wherein $R^5$ is selected from linear, branched or cyclic alkyl groups having up to 20 carbon atoms, in which up to 5 carbon atoms may be replaced with an oxygen atom;

preferably $R^2$ is selected from methoxy, ethoxy, propoxy, butoxy, pentoxy, hexoxy, heptoxy, octoxy, nonoxy, decanoxy, 2-ethylhexoxy, dodecan-1-oxy, 1-methoxy-3-(2-methoxyethoxy)propan-2-oxy, 1-octadecanoxy, 3-methylbutan-1-oxy, phenylmethanoxy, 3-ethyl-butoxy, and 2,3-dialkoxypropoxy, 1-methoxy-3-(2-methoxyethoxy)propoxy.

In one embodiment the compound of formula (I) is of following formula (Ib)

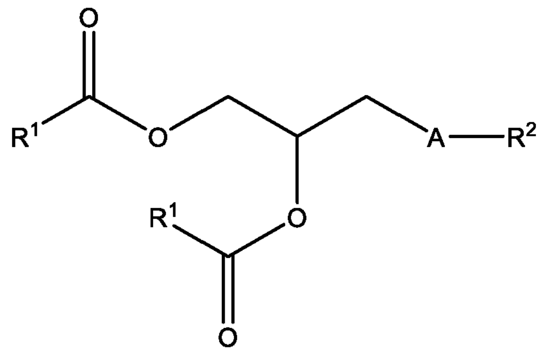

(Ib)

wherein the residues $R^1$ are independently from each other selected from saturated straight-chain $C_{12-18}$, preferably $C_{12-16}$, more preferably $C_{12-14}$, hydrocarbon groups; preferably both residues $R^1$ are the same; most preferably they are $C_{13}$ hydrocarbon groups; and

$R^2$ is $-OR^5$, wherein $R^5$ is selected from linear, branched or cyclic alkyl groups having up to 20 carbon atoms, in which up to 5 carbon atoms may be replaced with an oxygen atom;

preferably $R^2$ is selected from methoxy, ethoxy, propoxy, butoxy, pentoxy, hexoxy, heptoxy, octoxy, nonoxy, decanoxy, 2-ethylhexoxy, dodecan-1-oxy, 1-methoxy-3-(2-methoxyethoxy)propan-2-oxy, 1-octadecanoxy, 3-methylbutan-1-oxy, phenylmethanoxy, 3-ethyl-butoxy, and 2,3-dialkoxypropoxy, 1-methoxy-3-(2-methoxyethoxy)propoxy.

The group $-A-R^2$ is obtained by providing a precursor $H-O-A-R^2$, wherein -H is bound to a terminal oxygen atom of unit A. Thereafter $H-O-A-R^2$ is further modified and then a substitution or polycondensation reaction is performed to obtain the compound of formula (I).

$H-O-A-R^2$ is preferably obtained by an anionic ring opening copolymerisation of

ethylene oxide

with

at least one comonomer selected from

2-(methoxymethyl)oxirane (glycidyl methyl ether), 1,2-epoxy-3-ethoxypropane, 1,2-epoxy-3-n-propoxypropane, 1,2-epoxy-3-iso-propoxypropane, preferably the at least one comonomer is 2-(methoxymethyl)oxirane; and

an initiator, which is suitable to form $-R^2$ as defined in the compounds of formula (I), the initiator is preferably 1-methoxy-3-(2-methoxyethoxy)propan-2-ol, in the presence of a base.

The base is preferably a base having a pka of at least 16, preferably is potassium *tert*-butoxide.

In a preferred embodiment, a small amount of pure ethylene oxide is added after the copolymerization step so that 2 to 5 additional units derived from ethylene oxide are present at one end of A.

The synthesis of the polyoxyalkylene group A via anionic ring-opening copolymerization is for example described in PCT/EP2022/062896 in the reference the polyoxyalkylene group A is referred to as polymer, which is incorporate by reference.

The anionic ring-opening copolymerization is preferably performed at a temperature in the range of -10 to 90 °C, more preferably -10 to 70 °C, most preferably -10 to 60°C.

After obtaining the precursor $H-A-R^2$ in order to obtain the compound of formula (I)

i) -H is either replaced by a leaving group -X, which is able to undergo a substitution reaction, for example a tosylate, tosyl, or mesylate, preferably tosylate or tosyl group; or
ii) with the proviso that -H is bound to the oxygen atom of a unit a)

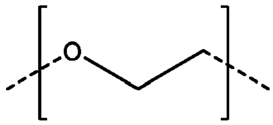

this group can be oxidized, for example with TEMPO/OCl$^-$ , 4-acetamido-TEMPO, 4-methoxy-TEMPO group, phenyliodine diacetate, phenyliodine bis(trifluoroacetate), preferably TEMPO/OCl$^-$, in order to form an

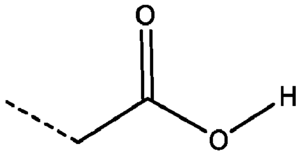

end group; thereafter a substitution (step i) or polycondensation (step ii) reaction is performed after step i) or step ii) with H-L or H-L$R^1R^2$, with the proviso that if step ii) is used the remainder of the former

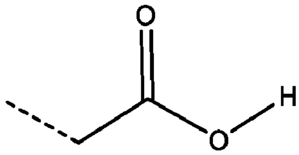

end group

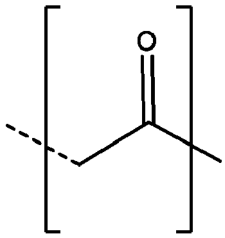

is now considered to be part of the linker group L, and if H-L was used L is further chemically modified to contain -$R^1$ and -$R^2$, for example by an esterification reaction.

The introduction of a leaving group -X and the oxidation reaction are well known to the person skilled in the art.

In one embodiment of the present invention the compound of formula (I) is produced by a method comprising or consisting of the steps:

i) providing a precursor compound selected from the group consisting of H-O-A-$R^2$ and H-O-$CH_2$-$CH_2$-O-A-$R^2$, wherein A and $R^2$ are as defined in formula (I), and

ii) replacing -H of the hydroxyl group of H-O-A-$R^2$ or H-O-$CH_2$-$CH_2$-O-A-$R^2$, respectively, by a group that forms together with the oxygen atom, -H is bound to, a leaving group -X, which is able to undergo a substitution reaction; and

iii) thereafter performing a substitution reaction with H-L$R^1_n$ to substitute -X with -L$R^1_n$, wherein L, n and $R^1$ are as defined as in formula (I).

In one embodiment of the present invention the compound of formula (I) is produced by a method comprising or consisting of the steps:

i) providing a precursor compound selected from the group consisting of H-O-A-$R^2$ and H-O-$CH_2$-$CH_2$-O-A-$R^2$, wherein A and $R^2$ are as defined as in formula (I), and

ii) replacing -H of the hydroxyl group of H-O-A-$R^2$ or H-O-$CH_2$-$CH_2$-O-A-$R^2$, respectively, by a group that forms

together with the oxygen atom, -H is bound to, a leaving group -X, which is able to undergo a substitution reaction; and

iii) thereafter performing a substitution reaction with H-L to substitute -X with -L, wherein L is as defined as in formula (I) and L comprises one or two groups selected from the group consisting of hydroxyl group and carboxyl group, and

iv) L is subsequently further chemically modified by an esterification reaction with the hydroxyl group(s) and/or carboxyl group(s) to introduce $-R^1$; under formation of an ester bond.

In one embodiment of the present invention the compound of formula (I) is produced by a method comprising or consisting of the steps:

i) providing a precursor compound $H-O-CH_2-CH_2-O-A-R^2$, wherein A and $R^2$ are as defined as in formula (I), and

ii) oxidizing the precursor, in order to form a compound $HOOC-CH_2-O-A-R^2$;

iii) thereafter performing an esterification reaction, and preferably a condensation reaction with $H-LR^1{}_n$, wherein L, n and $R^1$ are as defined in formula (I).

In one embodiment of the present invention the compound of formula (I) is produced by a method comprising or consisting of the steps:

i) providing a precursor compound $H-O-CH_2-CH_2-O-A-R^2$, wherein A and $R^2$ are as defined in formula (I), and

ii) oxidizing the precursor, in order to form a compound $HOOC-CH_2-O-A-R^2$;

iii) thereafter performing an esterification reaction and preferably a condensation reaction with H-L, wherein L is as defined in formula (I), and L in H-L comprises one or two groups selected from the group consisting of hydroxyl group and carboxyl group;

iv) L is subsequently further chemically modified by an esterification reaction with the hydroxyl group and carboxyl group to introduce $-R^1$.

The polyoxyalkylene group A comprises unit (a) and at least one of units (b) to (e). In one embodiment the polyoxyalkylene group A essentially consists or consists of unit (a) and at least one of units (b) to (e). In particular, the polyoxyalkylene group A is essentially free of residues, or is free of residues.

In one preferred embodiment the polyoxyalkylene group A comprises or consists of units (a) and (b) and optionally a further unit selected from (c) to (e). In one preferred embodiment the polyoxyalkylene group A comprises or consists of units (a) and (b). In one preferred embodiment the polyoxyalkylene group A consists of units (a) and (b).

For the sake of clarity, the passage comprises unit (a) does not mean that only one unit (a) is present, but that at least one unit of (a) are present in the group, i.e., several monomeric units derived from ethylene oxide can be present. For example, 1 to 20 units (a) can be present in group A. The same applies to the passage at least one unit (b) to (e). However, it can be that only one (number) unit (a) or only one (number) unit (b) to (e) is present in group A, if not explicitly defined otherwise.

In a preferred embodiment unit (a) makes up 5 to 95% of group A, whereas the other units add up to 100%. In a further preferred embodiment unit (b) is present in up to 70% of group A, more preferably unit (b) is present in 30 to 70% of group A, most preferably unit (a) is additionally present in 30 to 70%, adding up to 100%. In a preferred embodiment unit (a) makes up 5 to 95% of group A, whereas unit (b) adds up to 100%. In a further preferred embodiment (a) is present in 20 to 80% of group A and unit (b) adds up to 100%. In a further preferred embodiment (a) is present in 30 to 70% of group A and unit (b) adds up to 100%.

In a preferred embodiment the molar ratio of (a) to the sum of the molar amounts of (b) to (e), preferably the molar ratio of (a) to (b), is 1 to 9 to 9 to 1, preferably 2 to 8 to 8 to 2, more preferably 3 to 7 to 7 to 3.

In a preferred embodiment the dispersity (PDI) of $-A-R^3$ is 1.15 or less, more preferably 1.10 or less, most preferably 1.08 or less, wherein preferably the weight average and the number average molecular weight are determined with size-exclusion chromatography as described for Mw above. The size-exclusion chromatography can preferably be performed with dimethylformamide (DMF with 1 g/L LiBr) as the mobile phase (flow rate 1 mL/min) on poly(2-hydroxyethylmethacrylat) (PHEMA) 300/100/40 columns at 50 °C. Polymer concentrations were 1 mg/mL. Calibration was carried out using poly(ethylene glycol) standards (from Polymer Standard Service, Mainz, Germany).

In one embodiment $-A-R^2$ has a molecular weight, preferably a weight average molecular weight, of 1500 to

3500 g/mol, preferably 2000 to 3000 g/mol. In one embodiment -A-$R^2$ has a molecular weight, preferably a weight average molecular weight, in a range having any lower limit of 1500 g/mol, 1550 g/mol, 1600 g/mol, 1650 g/mol, 1700 g/mol, 1750 g/mol, 1800 g/mol, 1850 g/mol, 1900 g/mol, 1950 g/mol or 2000 g/mol in combination with any upper limit of 1550 g/mol, 1600 g/mol, 1650 g/mol, 1700 g/mol, 1750 g/mol, 1800 g/mol, 1850 g/mol, 1900 g/mol, 1950 g/mol, 2000 g/mol, 2050 g/mol, 2100 g/mol, 2150 g/mol, 2200 g/mol, 2250 g/mol, 2300 g/mol, 2350 g/mol, 2400 g/mol, 2450 g/mol, 2500 g/mol, 2550 g/mol, 2600 g/mol, 2650 g/mol, 2700 g/mol, 2750 g/mol, 2800 g/mol, 2850 g/mol, 2900 g/mol, 2950 g/mol, 3000 g/mol, 3050 g/mol, 3100 g/mol, 3150 g/mol, 3200 g/mol, 3250 g/mol, 3300 g/mol, 3350 g/mol, 3400 g/mol, 3450 g/mol or 3500 g/mol.

In one embodiment the compound of formula (I) has a molecular weight, preferably a weight average molecular weight, 1100 to 7500 g/mol, preferably of 1500 to 3500 g/mol, more preferably of 2000 to 3000 g/mol. In one embodiment -A-$R^2$ has a molecular weight, preferably a weight average molecular weight, in a range having any lower limit of 1500 g/mol, 1550 g/mol, 1600 g/mol, 1650 g/mol, 1700 g/mol, 1750 g/mol, 1800 g/mol, 1850 g/mol, 1900 g/mol, 1950 g/mol or 2000 g/mol in combination with any upper limit of 1550 g/mol, 1600 g/mol, 1650 g/mol, 1700 g/mol, 1750 g/mol, 1800 g/mol, 1850 g/mol, 1900 g/mol, 1950 g/mol, 2000 g/mol, 2050 g/mol, 2100 g/mol, 2150 g/mol, 2200 g/mol, 2250 g/mol, 2300 g/mol, 2350 g/mol, 2400 g/mol, 2450 g/mol, 2500 g/mol, 2550 g/mol, 2600 g/mol, 2650 g/mol, 2700 g/mol, 2750 g/mol, 2800 g/mol, 2850 g/mol, 2900 g/mol, 2950 g/mol, 3000 g/mol, 3050 g/mol, 3100 g/mol, 3150 g/mol, 3200 g/mol, 3250 g/mol, 3300 g/mol, 3350 g/mol, 3400 g/mol, 3450 g/mol or 3500 g/mol. The molecular weight of formula (I) is preferably measured as described above by size-exclusion chromatography. It may also be measured by matrix-assisted laser desorption/ionization time-of-flight mass spectrometry directly with the compound of formula (I).

The group $R^2$ can be modified by choosing a suitable initiator and/or by chemically modifying the end group initially formed during the anionic ring opening copolymerisation in the production of the precursor H-A-$R^2$. Such reactions are well known in the art. $R^2$ can for example be a functional group selected from acetal (dialkoxy), aldehyde (formyl), amide (carboxamido), azide, carbonate (alkoxycarbonyl)oxy), carboxyl (carboxy), carboxylic anhydride, ester (alkoxycarbonyl), ether, halo, haloformyl (carbonohaloridoyl), hemiacetal (alkoxyol), hemiketal (alkoxyol), hydroxy, imide (imido), imine (imino), ketal (dialkoxy), ketone (oyl), orthoester (trialkoxy), primary, secondary, tertiary amino group, primary, secondary and tertiary alkoxy group, sulfhydryl (sulfanyl, H-S-), thioether and combinations thereof. In a preferred embodiment the end group is selected from the group consisting of alkyl, hydrogen, hydroxy, alkoxy, sulfanyl, phthalimide, amide, amine and combinations thereof. The end group can be a primary alkoxy group selected of the formulae R-$(CH_2)_n$-O-, wherein R is linear, branched or cyclic alkyl or phenyl and n equals 1 to 20.

In a preferred embodiment $R^2$ is -$OR^5$, wherein $R^5$ is selected from linear, branched or cyclic alkyl groups having up to 20 carbon atoms, in which up to 5 carbon atoms may be replaced with an oxygen atom; more preferably $R^2$ is selected from methoxy, ethoxy, propoxy, butoxy, pentoxy, hexoxy, heptoxy, octoxy, nonoxy, decanoxy, 2-ethylhexoxy, dodecan-1-oxy, 1-methoxy-3-(2-methoxyethoxy)propan-2-oxy, 1-octadecanoxy, 3-methylbutan-1-oxy, phenylmethanoxy, 3-ethyl-butoxy, and 2,3-dialkoxypropoxy, 1-methoxy-3-(2-methoxyethoxy)propoxy. The end group can be introduced by a suitable initiator, which can be alkyl anions and hydride anions, like metal alkyl or metal hydride compounds of the above-mentioned end groups -$R^2$. Preferably however the alkoxy anion and the thioalkoxy anion are not tertiary alkoxy anions. The imide anion is preferably a phthalimide anion. The metal counterion is preferably $Na^+$, $K^+$ or $Cs^+$.

In one embodiment the initiator is a salt of $MeOCH_2CH_2O^-$, $MeO(CH_2CH_2O)_2^-$, $BenzylOCH_2CH_2O^-$, $BzO(CH_2CH_2O)_2^-$, $(Bz)_2N-CH_2CH_2O^-$, $(Bz)_2N-(CH_2CH_2O)_2^-$, phthalimide-$CH_2CH_2O^-$, phthalimide-$(CH2CH2O)_2^-$, wherein Me is methyl and Bz is benzyl. Most preferred are $MeO(CH_2CH_2O)_2^-$, $BzOCH_2CH_2O^-$ and $(Bz)_2N-CH_2CH_2O^-$. The counter ion is preferably $Na^+$, $K^+$ or $Cs^+$.

The initiator may be provided in an inert solvent. The solvent is preferably a non-protic solvent and most preferably dimethyl sulfoxide (DMSO) or toluene. Furthermore, the copolymerization reaction is preferably performed in the same solvent.

The end-group fidelity of the group -A-$R^2$ of the present invention may be determined on the compounds of formula (I) or on the respective precursor H-A-$R^2$ by MALDI TOF or by a combination of MALDI TOF with $^1H$ NMR by known methods. The group -A-$R^2$ of the present invention has preferably an end-group fidelity of at least 95 %, more preferably of at least 98 %.

The polyoxyalkylene group A of the present invention may be a random copolymer. Such groups provide the lowest immunogenicity, as they do not provide a blueprint for the immune system for antibodies. They are intrinsically resistant to an immune response and are therefore preferred embodiments of the present invention.

In an alternative embodiment the polyoxyalkylene group A of the present invention may have a block like structure or a tapered or gradient structure. The methods to prepare such polymers are known to the skilled person in the field of polyoxyalkylenes. In such embodiments it is preferred that no more than 5% of group A comprise blocks with more than 15 ethylene oxide derived repeating units, more preferably that no more than 5% of the macromolecules of the polymers comprise blocks with more than 8 ethylene oxide derived repeating units.

Often crystallizations produce a solvate of a compound of the present invention. As used herein, the term "solvate" refers to an aggregate that comprises one or more molecules of a compound of the invention with one or more

molecules of solvent. The solvent may be water, in which case the solvate may be a hydrate. Alternatively, the solvent may be an organic solvent. Thus, the compounds of the present invention may exist as a hydrate, including a monohydrate, dihydrate, hemihydrate, sesquihydrate, trihydrate, tetrahydrate and the like, as well as the corresponding solvated forms. Solvates of compound of the invention may be true solvates, while in other cases the compound of the invention may merely retain adventitious water or be a mixture of water plus some adventitious solvent.

The present invention refers as well to the use of a polyoxyalkylene polymer A or a compound of the formula H-O-A-$R^2$ or a compound of the formula H-O-$CH_2$-$CH_2$-O-A-$R^2$ for the preparation of a composition comprising at least one compound of formula (I) according to the present invention and at least one active agent. The at least one active agent is preferably comprised in an effective amount.

Active agents, as used herein, include any molecule or compound capable of exerting a desired effect on a cell, tissue, organ, or subject. Such effects may be biological, physiological, or cosmetic, for example. Active agents may be any type of molecule or compound, including e.g., nucleic acids, nucleic acid analogues, peptides and polypeptides, including, e.g., antibodies, such as, e.g., polyclonal antibodies, monoclonal antibodies, antibody fragments; humanized antibodies, recombinant antibodies, recombinant human antibodies, and Primatized™ antibodies, cytokines, growth factors, apoptotic factors, differentiation-inducing factors, cell surface receptors and their ligands; hormones; and small molecules, including small organic molecules or compounds.

In one embodiment, the active agent is a therapeutic agent, or a salt or derivative thereof. Therapeutic agent derivatives may be therapeutically active themselves or they may be prodrugs, which become active upon further modification.

In one embodiment, therapeutic agents include any therapeutically effective agent or drug, such as anti-inflammatory compounds, anti-depressants, stimulants, analgesics, antibiotics, birth control medication, antipyretics, vasodilators, anti-angiogenics, cytovascular agents, signal transduction inhibitors, cardiovascular drugs, e.g., anti-arrhythmic agents, vasoconstrictors, hormones, and steroids.

In one embodiment the therapeutic agent is an oncology drug, which may also be referred to as an anti-tumor drug, an anti-cancer drug, a tumor drug, an antineoplastic agent, or the like. Examples of oncology drugs that may be used according to the invention include, but are not limited to, adriamycin, alkeran, allopurinol, altretamine, amifostine, anastrozole, arsenic trioxide, azathioprine, bexarotene, biCNU, bleomycin, busulfan intravenous, busulfan oral, capecitabine (Xeloda), carboplatin, carmustine, CCNU, celecoxib, chlorambucil, cisplatin, cladribine, cyclosporin A, cytarabine, cytosine arabinoside, daunorubicin, Cytoxan, daunorubicin, dexamethasone, dexrazoxane, dodetaxel, doxorubicin, doxorubicin, DTIC, epirubicin, estramustine, etoposide phosphate, etoposide and VP-16, exemestane, FK506, fludarabine, fluorouracil, 5-FU, gemcitabine (Gemzar), gemtuzumab-ozogamicin, goserelin acetate, hydrea, hydroxyurea, idarubicin, ifosfamide, imatinib mesylate, interferon, irinotecan (Camptostar, CPT-111), letrozole, leucovorin, leustatin, leuprolide, levamisole, litretinoin, megastrol, melphalan, L-PAM, mesna, methotrexate, methoxsalen, mithramycin, mitomycin, mitoxantrone, nitrogen mustard, paclitaxel, pamidronate, Pegademase, pentostatin, porfimer sodium, prednisone, rituxan, streptozocin, STI-571, tamoxifen, taxotere, temozolamide, teniposide, VM-26, topotecan (Hycamtin), toremifene, tretinoin, ATRA, valrubicin, velban, vinblastine, vincristine, VP16, and vinorelbine. Other examples of oncology drugs that may be used according to the invention are ellipticin and ellipticin analogs or derivatives, epothilones, intracellular kinase inhibitors and camptothecins.

In a preferred embodiment the at least one active agent is selected from the group consisting of proteins, peptides, carbohydrates, nucleic acids and nucleic acid analogues, organic molecules having a molecular weight up to 1000 g/mol and combinations thereof.

Any known protein is in general suitable. Exemplarily proteins include glycoproteins and apolipoproteins. As used herein, the term "apolipoprotein" or "lipoprotein" refers to apolipoproteins known to those of skill in the art and variants and fragments thereof and to apolipoprotein agonists, analogues or fragments thereof as well as chimeric construction of an apolipoprotein. Apolipoproteins utilized in the invention also include recombinant, synthetic, semi-synthetic or purified apolipoproteins.

Any known peptide is in general suitable. The term peptide according to the present invention includes peptidomimetic. The peptide or peptidomimetic can be about 5 to 50 amino acids long, e.g., about 5, 10, 15, 20, 25, 30, 35, 40, 45, or 50 amino acids long. A "cell permeation peptide" is capable of permeating a cell, e.g., a microbial cell, such as a bacterial or fungal cell, or a mammalian cell, such as a human cell. A microbial cell-permeating peptide can be, for example, an α-helical linear peptide (e.g., LL-37 or Ceropin PI), a disulfide bond-containing peptide (e.g., α-defensin, β-defensin or bactenecin), or a peptide containing only one or two dominating amino acids (e.g., PR-39 or indolicidin). A cell permeation peptide can also include a nuclear localization signal (NLS). For example, a cell permeation peptide can be a bipartite amphipathic peptide, such as MPG, which is derived from the fusion peptide domain of HIV-1 gp41 and the NLS of SV40 large T.

In one embodiment, a targeting peptide tethered to an iRNA agent and/or the carrier oligomer can be an amphipathic α-helical peptide.

Peptide and peptidomimetic ligands include those having naturally occurring or modified peptides, e.g., D- or

L-peptides; α-, β-, or γ-peptides; N-methyl peptides; azapeptides; peptides having one or more amide, i.e., peptide, linkages replaced with one or more urea, thiourea, carbamate, or sulfonyl urea linkages; or cyclic peptides.

Any known carbohydrate is in general suitable. Exemplarily carbohydrates include dextran, pullulan, chitin, chitosan, inulin, cyclodextrin or hyaluronic acid.

As described herein, the compositions of the present invention are particularly useful for the delivery of nucleic acids or nucleic acid analogues, including, e.g., siRNA molecules, mRNA molecules, plasmids, micro RNA, antagomirs, aptamers, and ribozymes. Therefore, the compositions of the present invention may be used to modulate the expression of target genes and proteins both in vitro and in vivo by contacting cells with a composition of the present invention associated with a nucleic acid that reduces target gene expression, e.g., an siRNA or micro RNA, or a nucleic acid that may be used to increase expression of a desired protein, e.g., an mRNA or a plasmid encoding the desired protein.

Any known nucleic acids and nucleic acid analogues or plasmids are in general suitable. Their methods of preparation include but are not limited to chemical synthesis and enzymatic, chemical cleavage of a longer precursor or in vitro transcription. Methods of synthesizing DNA and RNA nucleotides are widely used and well known in the art.

Nucleic acids and nucleic acid analogues include polymers containing at least two deoxyribonucleotides or ribonucleotides in either single- or double- or triple-stranded form and includes DNA, RNA, and hybrids thereof. DNA may be in the form of linear DNA, circular DNA, plasmid DNA (pDNA), antisense molecules, PCR products, or vectors. RNA may be in the form of chemically modified or unmodified messenger RNA (mRNA), self-amplifying RNA (saRNA), circular RNA (circRNA) comprising at least one coding sequence, small hairpin RNA (shRNA), small interfering RNA (siRNA), micro RNA (miRNA), dicer substrate RNA, antisense oligonucleotide (ASO), transfer RNA (tRNA), single guide RNA (sgRNA) or viral RNA (vRNA) and combinations thereof. The nucleic acids may include one or more oligonucleotide modification.

Nucleic acids of the present invention may be of various lengths, generally dependent upon the particular form of nucleic acid. For example, in particular embodiments, plasmids or genes may be from about 1,000 to 100,000 nucleotide residues in length. In particular embodiments, oligonucleotides may range from about 10 to 100 nucleotides in length. In various related embodiments, oligonucleotides, single-stranded, double-stranded, and triple-stranded, may range in length from about 10 to about 50 nucleotides, from about 20 to about 50 nucleotides, from about 15 to about 30 nucleotides, from about 20 to about 30 nucleotides in length.

The term "circular DNA" includes any DNA that forms a closed loop and has no ends. Examples of circular DNA are plasmid DNA, minicircle DNA and doggybone DNA (dbDNA™).

For plasmid DNA, preparation for use with embodiments of this invention commonly utilizes, but is not limited to, expansion and isolation of the plasmid DNA in vitro in a liquid culture of bacteria containing the plasmid of interest. The presence of a gene in the plasmid of interest that encodes resistance to a particular antibiotic (penicillin, kanamycin, etc.) allows those bacteria containing the plasmid of interest to selectively grow in antibiotic-containing cultures. Methods of isolating plasmid DNA are widely used and well known in the art. Plasmid isolation can be performed using a variety of commercially available kits including, but not limited to Plasmid Plus (Qiagen), GenJET plasmid MaxiPrep (Thermo), and Pure Yield MaxiPrep (Promega) kits as well as with commercially available reagents.

In preferred embodiments, the present invention specifically refers to compositions for the delivery of mRNA or siRNA molecules.

For mRNA, the primary methodology of preparation is, but not limited to, enzymatic synthesis (also termed in vitro transcription) which currently represents the most efficient method to produce long sequence-specific mRNA. In vitro transcription describes a process of template-directed synthesis of RNA molecules from an engineered DNA template comprised of an upstream bacteriophage promoter sequence (e.g., including but not limited to that from the T7, T3 and SP6 coliphage) linked to a downstream sequence encoding the gene of interest. Template DNA can be prepared for in vitro transcription from a number of sources with appropriate techniques which are well known in the art including, but not limited to, plasmid DNA and polymerase chain reaction amplification.

Transcription of the RNA occurs in vitro using the linearized DNA template in the presence of the corresponding RNA polymerase and adenosine, guanosine, uridine, and cytidine ribonucleoside triphosphates (rNTPs) under conditions that support polymerase activity while minimizing potential degradation of the resultant mRNA transcripts. In vitro transcription can be performed using a variety of commercially available kits including, but not limited to RiboMax Large Scale RNA Production System (Promega), MegaScript Transcription kits (Life Technologies), as well as with commercially available reagents including RNA polymerases and rNTPs. The methodology for in vitro transcription of mRNA is well known in the art.

The desired in vitro transcribed mRNA is then purified from the undesired components of the transcription or associated reactions (including unincorporated rNTPs, protein enzyme, salts, short RNA oligos, etc.). Techniques for the isolation of the mRNA transcripts are well known in the art. Well known procedures include phenol/chloroform extraction or precipitation with either alcohol (ethanol, isopropanol) in the presence of monovalent cations or lithium chloride.

Additional, non-limiting examples of purification procedures which can be used include size exclusion chromatography, silica-based affinity chromatography and polyacrylamide gel electrophoresis. Purification can be performed using a variety of commercially available kits including, but not limited to SV Total Isolation System (Promega) and In Vitro Transcription Cleanup and Concentration Kit (Norgen Biotek).

Furthermore, while reverse transcription can yield large quantities of mRNA, the products can contain a number of aberrant RNA impurities associated with undesired polymerase activity which may need to be removed from the full-length mRNA preparation. These include short RNAs that result from abortive transcription initiation as well as double-stranded RNA (dsRNA) generated by RNA-dependent RNA polymerase activity, RNA-primed transcription from RNA templates and self-complementary 3' extension. It has been demonstrated that these contaminants with dsRNA structures can lead to undesired immunostimulatory activity through interaction with various innate immune sensors in eukaryotic cells that function to recognize specific nucleic acid structures and induce potent immune responses. This in turn, can dramatically reduce mRNA translation since protein synthesis is reduced during the innate cellular immune response. Therefore, additional techniques to remove these dsRNA contaminants have been developed and are known in the art including but not limited to scale able HPLC purification. HPLC purified mRNA has been reported to be translated at much greater levels, particularly in primary cells and in vivo.

A significant variety of modifications have been described in the art which are used to alter specific properties of in vitro transcribed mRNA, and improve its utility. These include, but are not limited to modifications to the 5' and 3' termini of the mRNA. Endogenous eukaryotic mRNA typically contain a cap structure on the 5'- end of a mature molecule which plays an important role in mediating binding of the mRNA Cap Binding Protein (CBP), which is in turn responsible for enhancing mRNA stability in the cell and efficiency of mRNA translation. Therefore, highest levels of protein expression are achieved with capped mRNA transcripts. The 5 '-cap contains a 5 '-5 '-triphosphate linkage between the 5 '-most nucleotide and guanine nucleotide. The conjugated guanine nucleotide is methylated at the N7 position. Additional modifications include methylation of the ultimate and penultimate most 5 '-nucleotides on the 2'-hydroxyl group.

Multiple distinct cap structures can be used to generate the 5'-cap of in vitro transcribed synthetic mRNA. 5'-capping of synthetic mRNA can be performed co- transcriptionally with chemical cap analogs (i.e., capping during in vitro transcription). For example, the Anti - Reverse Cap Analog (ARC A) cap contains a 5'-5'-triphosphate guanine-guanine linkage where one guanine contains an N7 methyl group as well as a 3'-O-methyl group. However, up to 20% of transcripts remain uncapped during this co-transcriptional process and the synthetic cap analog is not identical to the 5'-cap structure of an authentic cellular mRNA, potentially reducing translatability and cellular stability. Alternatively, synthetic mRNA molecules may also be enzymatically capped post-transcriptionally. These may generate a more authentic 5'-cap structure that more closely mimics, either structurally or functionally, the endogenous 5'-cap which have enhanced binding of cap binding proteins, increased half-life and reduced susceptibility to 5' endonucleases and/or reduced 5' decapping. Numerous synthetic 5'-cap analogs have been developed and are known in the art to enhance mRNA stability and translatability.

On the 3'-terminus, a long chain of adenine nucleotides (poly-A tail) is normally added to mRNA molecules during RNA processing. Immediately after transcription, the 3' end of the transcript is cleaved to free a 3' hydroxyl to which poly-A polymerase adds a chain of adenine nucleotides to the RNA in a process called polyadenylation. The poly-A tail has been extensively shown to enhance both translational efficiency and stability of mRNA.

Poly (A) tailing of in vitro transcribed mRNA can be achieved using various approaches including, but not limited to, cloning of a poly (T) tract into the DNA template or by post-transcriptional addition using Poly (A) polymerase. The first case allows in vitro transcription of mRNA with poly (A) tails of defined length, depending on the size of the poly (T) tract, but requires additional manipulation of the template. The latter case involves the enzymatic addition of a poly (A) tail to in vitro transcribed mRNA using poly (A) polymerase which catalyzes the incorporation of adenine residues onto the 3'termini of RNA, requiring no additional manipulation of the DNA template, but results in mRNA with poly(A) tails of heterogeneous length. 5'-capping and 3'-poly (A) tailing can be performed using a variety of commercially available kits including, but not limited to Poly (A) Polymerase Tailing kit (Epicenter), mMESSAGE mMACHINE T7 Ultra kit and Poly (A) Tailing kit (Life Technologies) as well as with commercially available reagents, various ARCA caps, Poly (A) polymerase, etc.

In addition to 5' cap and 3' poly adenylation, other modifications of the in vitro transcripts have been reported to provide benefits as related to efficiency of translation and stability. It is well known in the art that pathogenic DNA and RNA can be recognized by a variety of sensors within eukaryotes and trigger potent innate immune responses. The ability to discriminate between pathogenic and self DNA and RNA has been shown to be based, at least in part, on structure and nucleoside modifications since most nucleic acids from natural sources contain modified nucleosides. In contrast, in vitro synthesized RNA lacks these modifications, thus rendering it immunostimulatory which in turn can inhibit effective mRNA translation as outlined above. The introduction of modified nucleosides into in vitro transcribed mRNA can be used to prevent recognition and activation of RNA sensors, thus mitigating this undesired immunostimulatory activity and enhancing translation capacity. The modified nucleosides and nucleotides used in the synthesis of modified RNAs can be prepared monitored and utilized using general methods and procedures known in the art. A large variety of nucleoside modifications are available that may be incorporated alone or in combination with other modified nucleosides

to some extent into the in vitro transcribed mRNA, e.g., as disclosed in US 2012/0251618. In vitro synthesis of nucleoside-modified mRNA has been reported to have reduced ability to activate immune sensors with a concomitant enhanced translational capacity.

Other components of mRNA which can be modified to provide benefit in terms of translatability and stability include the 5' and 3' untranslated regions (UTR). Optimization of the UTRs (favourable 5' and 3' UTRs can be obtained from cellular or viral RNAs), either both or independently, have been shown to increase mRNA stability and translational efficiency of in vitro transcribed mRNA.

In one embodiment the RNA is a self-amplifying RNA. A self-amplifying RNA molecule (replicon) can, when delivered to a vertebrate cell even without any proteins, lead to the production of multiple daughter RNAs by transcription from itself (via an antisense copy which it generates from itself). A self-amplifying RNA molecule is thus in certain embodiments: a (+) strand molecule that can be directly translated after delivery to a cell, and this translation provides an RNA-dependent RNA polymerase which then produces both antisense and sense transcripts from the delivered RNA. Thus, the delivered RNA leads to the production of multiple daughter RNAs. These daughter RNAs, as well as collinear subgenomic transcripts, may be translated themselves to provide in situ expression of an encoded protein, or may be transcribed to provide further transcripts with the same sense as the delivered RNA which are translated to provide in situ expression of the protein. The overall result of this sequence of transcriptions is an amplification in the number of the introduced self-amplifying RNAs and so the encoded protein becomes a major polypeptide product of the host cells.

In one embodiment the RNA is a circular RNA (circRNA) is a type of single-stranded RNA which, unlike linear RNA, forms a covalently closed continuous loop by joining the 3' and 5' ends normally present in an RNA molecule. Like mRNA, circRNA can be designed to encode and express proteins. In particular embodiments, the oligonucleotide (or a strand thereof) of the present invention specifically hybridizes to or is complementary to a target polynucleotide.

In one embodiment the RNA is a hairpin siRNA have a duplex region equal to or at least 17, 18, 19, 29, 21, 22, 23, 24, or 25 nucleotide pairs. The duplex region will may be equal to or less than 200, 100, or 50, in length. In certain embodiments, ranges for the duplex region are 15 to 30, 17 to 23, 19 to 23, and 19 to 21 nucleotides pairs in length. The hairpin may have a single strand overhang or terminal unpaired region. In certain embodiments, the overhangs are 2 to 3 nucleotides in length. In some embodiments, the overhang is at the sense side of the hairpin and in some embodiments on the antisense side of the hairpin.

In one embodiment the RNA is a SiRNA. SiRNAs are RNA duplexes normally 16 to 30 nucleotides long that can associate with a cytoplasmic multi-protein complex known as RNAi-induced silencing complex (RISC). RISC loaded with siRNA mediates the degradation of homologous mRNA transcripts, therefore siRNA can be designed to knock down protein expression with high specificity. Unlike other antisense technologies, siRNA function through a natural mechanism evolved to control gene expression through non-coding RNA.

A "single strand siRNA compound" as used herein, is an siRNA compound which is made up of a single molecule. It may include a duplexed region, formed by intra-strand pairing, e.g., it may be, or include, a hairpin or pan-handle structure. Single strand siRNA compounds may be antisense with regard to the target molecule.

A single strand siRNA compound may be sufficiently long that it can enter the RISC and participate in RISC mediated cleavage of a target mRNA. A single strand siRNA compound is at least 14, and in other embodiments at least 15, 20, 25, 29, 35, 40, or 50 nucleotides in length. In certain embodiments, it is less than 200, 100, or 60 nucleotides in length.

A "double stranded siRNA compound" as used herein, is an siRNA compound which includes more than one, and in some cases two, strands in which interchain hybridization can form a region of duplex structure.

The antisense strand of a double stranded siRNA compound may be equal to or at least, 14, 15, 16 17, 18, 19, 25, 29, 40, or 60 nucleotides in length. It may be equal to or less than 200, 100, or 50, nucleotides in length. Ranges may be 17 to 25, 19 to 23, and 19 to 21 nucleotides in length. As used herein, term "antisense strand" means the strand of an siRNA compound that is sufficiently complementary to a target molecule, e.g., a target RNA.

The sense strand of a double stranded siRNA compound may be equal to or at least 14, 15, 16, 17, 18, 19, 25, 29, 40, or 60 nucleotides in length. It may be equal to or less than 200, 100, or 50, nucleotides in length. Ranges may be 17 to 25, 19 to 23, and 19 to 21 nucleotides in length.

The double strand portion of a double stranded siRNA compound may be equal to or at least, 14, 15, 16, 17, 18, 19, 20, 21, 22, 23, 24, 25, 29, 40, or 60 nucleotide pairs in length. It may be equal to or less than 200, 100, or 50, nucleotides pairs in length.

Ranges may be 15 to 30, 17 to 23, 19 to 23, and 19 to 21 nucleotides pairs in length.

In many embodiments, the siRNA compound is sufficiently large that it can be cleaved by an endogenous molecule, e.g., by Dicer, to produce smaller siRNA compounds, e.g., siRNAs agents.

The sense and antisense strands may be chosen such that the double-stranded siRNA compound includes a single strand or unpaired region at one or both ends of the molecule. Thus, a double-stranded siRNA compound may contain sense and antisense strands, paired to contain an overhang, e.g., one or two 5' or 3' overhangs, or a 3' overhang of 1 to 3 nucleotides. The overhangs can be the result of one strand being longer than the other, or the result of two

strands of the same length being staggered. Some embodiments will have at least one 3' overhang. In one embodiment, both ends of an siRNA molecule will have a 3' overhang. In some embodiments, the overhang is 2 nucleotides.

In certain embodiments, the length for the duplexed region is between 15 and 30, or 18, 19, 20, 21, 22, and 23 nucleotides in length, e.g., in the siRNA compound range discussed above. siRNA compounds can resemble in length and structure the natural Dicer processed products from long dsiRNAs. Embodiments in which the two strands of the siRNA compound are linked, e.g., covalently linked are also included. Hairpin, or other single strand structures which provide the required double stranded region, and a 3' overhang are also within the invention.

The siRNA compounds described herein, including double-stranded siRNA compounds and single-stranded siRNA compounds can mediate silencing of a target RNA, e.g., mRNA, e.g., a transcript of a gene that encodes a protein. For convenience, such mRNA is also referred to herein as mRNA to be silenced. Such a gene is also referred to as a target gene. In general, the RNA to be silenced is an endogenous gene or a pathogen gene. In addition, RNAs other than mRNA, e.g., tRNAs, and viral RNAs, can also be targeted.

As used herein, the phrase "mediates RNAi" refers to the ability to silence, in a sequence specific manner, a target RNA. While not wishing to be bound by theory, it is believed that silencing uses the RNAi machinery or process and a guide RNA, e.g., a siRNA compound of 21 to 23 nucleotides.

In one embodiment, an siRNA compound is "sufficiently complementary" to a target RNA, e.g., a. target mRNA, such that the siRNA compound silences production of protein encoded by the target mRNA. In another embodiment, the siRNA compound is "exactly complementary" to a target RNA, e.g., the target RNA and the siRNA compound anneal, for example to form a hybrid made exclusively of Watson-Crick base pairs in the region of exact complementarity. A "sufficiently complementary" target RNA can include an internal region (e.g., of at least 10 nucleotides) that is exactly complementary to a target RNA. Moreover, in certain embodiments, the siRNA compound specifically discriminates a single-nucleotide difference. In this case, the siRNA compound only mediates RNAi if exact complementary is found in the region (e.g., within 7 nucleotides of) the single-nucleotide difference.

In addition to conventional siRNA, dicer substrate siRNA can be employed as a less immunogenic alternative. DsiRNA is 25 to 30 nucleotides in length, and after cellular uptake is further cleaved and processed by the Dicer enzyme converting it into the active form which then associates with the RISC.

Antisense RNA directed to a target polynucleotide. The term "antisense RNA" or simply "antisense" is meant to include RNA that are complementary to a targeted polynucleotide sequence. Antisense RNA are single strands of RNA that are complementary to a chosen sequence, e.g., a target gene mRNA. Antisense RNA are thought to inhibit gene expression by binding to a complementary mRNA. Binding to the target mRNA can lead to inhibition of gene expression either by preventing translation of complementary mRNA strands by binding to it, or by leading to degradation of the target mRNA. In particular embodiments, antisense RNA contains from about 10 to about 50 nucleotides, more preferably about 15 to about 30 nucleotides. The term also encompasses antisense RNA that may not be exactly complementary to the desired target gene.

Micro RNAs (miRNAs) are a highly conserved class of small RNA molecules that are transcribed from DNA in the genomes of plants and animals, but are not translated into protein. Processed miRNAs are single stranded 17 to 25 nucleotide (nt) RNA molecules that become incorporated into the RNA-induced silencing complex (RISC) and have been identified as key regulators of development, cell proliferation, apoptosis and differentiation.

In one embodiment the RNA is transfer RNA (tRNA). Transfer RNA is an adaptor molecule composed of RNA, typically 76 to 90 nucleotides in length that serves as the physical link between the mRNA and the amino acid sequence of proteins. Transfer RNA does this by carrying an amino acid to the protein synthesizing machinery of a cell called the ribosome. Complementation of a 3-nucleotide codon in a messenger RNA (mRNA) by a 3-nucleotide anticodon of the tRNA results in protein synthesis based on the mRNA code. As such, tRNAs are a necessary component of translation, the biological synthesis of new proteins in accordance with the genetic code.

In one embodiment, the nucleic acid is a single guide RNA applied to direct CRISPR/Cas9 mediated gene editing. The single guide RNA hybridizes with a target sequence in the genome of a cell and complexes with the Cas9 protein at the target site initiating single or double strand breaks.

In one embodiment the at least one active agent is selected from antagomirs, aptamers, ribozymes, immunostimulatory oligonucleotides, decoy oligonucleotides, supermirs, miRNA mimics, antimir or miRNA inhibitors and UI adaptors.

Antagomirs are RNA-like oligonucleotides that harbor various modifications for RNAse protection and pharmacologic properties, such as enhanced tissue and cellular uptake. They differ from normal RNA by, for example, complete 2'-0-methylation of sugar, phosphorothioate backbone and, for example, a cholesterol-moiety at 3'-end.

Aptamers are nucleic acid or peptide molecules that bind to a particular molecule of interest with high affinity and specificity. DNA or RNA aptamers have been successfully produced which bind many different entities from large proteins to small organic molecules. Aptamers may be RNA or DNA based, and may include a riboswitch. A riboswitch is a part of an mRNA molecule that can directly bind a small target molecule, and whose binding of the target affects the gene's activity. The aptamer may be prepared by any known method, including synthetic, recombinant, and purification

methods, and may be used alone or in combination with other aptamers specific for the same target. Further, as described more fully herein, the term "aptamer" specifically includes "secondary aptamers" containing a consensus sequence derived from comparing two or more known aptamers to a given target.

Ribozymes are RNA molecules complexes having specific catalytic domains that possess endonuclease activity. For example, a large number of ribozymes accelerate phosphoester transfer reactions with a high degree of specificity, often cleaving only one of several phosphoesters in an oligonucleotide substrate. This specificity has been attributed to the requirement that the substrate bind via specific base-pairing interactions to the internal guide sequence ("IGS") of the ribozyme prior to chemical reaction.

Nucleic acids associated with lipid particles of the present invention may be immunostimulatory, including immunostimulatory oligonucleotides (ISS; single-or double-stranded) capable of inducing an immune response when administered to a subject, which may be a mammal or other patient.

Because transcription factors recognize their relatively short binding sequences, even in the absence of surrounding genomic DNA, short oligonucleotides bearing the consensus binding sequence of a specific transcription factor can be used as tools for manipulating gene expression in living cells. This strategy involves the intracellular delivery of such "decoy oligonucleotides", which are then recognized and bound by the target factor. Occupation of the transcription factor's DNA-binding site by the decoy renders the transcription factor incapable of subsequently binding to the promoter regions of target genes.

A supermir refers to a single stranded, double stranded or partially double stranded oligomer or polymer of ribonucleic acid (RNA) or deoxyribonucleic acid (DNA) or both or modifications thereof, which has a nucleotide sequence that is substantially identical to a miRNA and that is antisense with respect to its target. This term includes oligonucleotides composed of naturally-occurring nucleobases, sugars and covalent internucleoside (backbone) linkages and which contain at least one non-naturally-occurring portion which functions similarly. Such modified or substituted oligonucleotides are preferred over native forms because of desirable properties such as, for example, enhanced cellular uptake, enhanced affinity for nucleic acid target and increased stability in the presence of nucleases.

miRNA mimics represent a class of molecules that can be used to imitate the gene silencing ability of one or more miRNAs. Thus, the term "microRNA mimic" refers to synthetic non-coding RNAs (i.e., the miRNA is not obtained by purification from a source of the endogenous miRNA) that are capable of entering the RNAi pathway and regulating gene expression. miRNA mimics can be designed as mature molecules (e.g., single stranded) or mimic precursors (e.g., pri- or pre-miRNAs).

The terms "antimir," "microRNA inhibitor," "miR inhibitor," or "inhibitor," are synonymous and refer to oligonucleotides or modified oligonucleotides that interfere with the ability of specific miRNAs. In general, the inhibitors are nucleic acid or modified nucleic acids in nature including oligonucleotides comprising RNA, modified RNA, DNA, modified DNA, locked nucleic acids (LNAs), or any combination of the above. Modifications include 2' modifications and internucleotide modifications (e.g., phosphorothioate modifications) that can affect delivery, stability, specificity, intracellular compartmentalization, or potency. In addition, miRNA inhibitors can comprise conjugates that can affect delivery, intracellular compartmentalization, stability, and/or potency. Inhibitors can adopt a variety of configurations including single stranded, double stranded (RNA/RNA or RNA/DNA duplexes), and hairpin designs, in general, microRNA inhibitors comprise contain one or more sequences or portions of sequences that are complementary or partially complementary with the mature strand (or strands) of the miRNA to be targeted, in addition, the miRNA inhibitor may also comprise additional sequences located 5' and 3' to the sequence that is the reverse complement of the mature miRNA. The additional sequences may be the reverse complements of the sequences that are adjacent to the mature miRNA in the pri-miRNA from which the mature miRNA is derived, or the additional sequences may be arbitrary sequences (having a mixture of A, G, C, or U).

UI adaptor inhibit poly A sites and are bifunctional oligonucleotides with a target domain complementary to a site in the target gene's terminal exon and a 'UI domain' that binds to the UI smaller nuclear RNA component of the UI snRNP. UI snRNP is a ribonucleoprotein complex that functions primarily to direct early steps in spliceosome formation by binding to the pre-mRNA exon- intron boundary. Nucleotides 2-11 of the 5'end of UI snRNA base pair bind with the 5'ss of the pre mRNA. In one embodiment, oligonucleotides of the invention are UI adaptors.

In a preferred embodiment the at least one active agent is selected from the group consisting of linear or circular DNA, plasmid DNA (pDNA), self-amplifying RNA (saRNA), chemically modified or unmodified messenger RNA (mRNA), circular RNA (circRNA) comprising at least one coding sequence; small hairpin RNA (shRNA), small interfering RNA (siRNA), microRNA (miRNA), dicer substrate RNA, antisense oligonucleotide (ASO), transfer RNA (tRNA), single guide RNA (sgRNA) or viral RNA (vRNA); and combinations thereof.

In one embodiment the at least one active agent is an organic molecule having a molecular weight up to 1000 g/mol, also referred to as small molecule in the pharmaceutical field, preferably the organic molecule is selected from paclitaxel, doxorubicin, irinotecan, vincristine and oxaliplatin.

The composition according to the present invention can further comprise a compound selected from a lipid, different from the compound of formula (I), like an ionizable lipid, a cationic lipid, a neutral lipid or a structural lipid, a

sterol or a sterol derivative; a buffering agent, a pharmaceutically acceptable salt, a cryoprotectant or any combination thereof.

Suitable lipids, different to the compound of formula (I), according to the present invention, which can be further present are for example diacylphosphatidylcholine, diacylphosphatidylethanolamine, ceramide, sphingomyelin, dihydrosphingomyelin, cephalin, and cerebrosides or mixtures thereof. Lipids having a variety of acyl chain groups of varying chain length and degree of saturation are available or may be isolated or synthesized by well-known techniques. In one embodiment, lipids containing saturated fatty acids with carbon chain lengths in the range of C10 to C20 are preferred. In one embodiment, lipids with mono- or diunsaturated fatty acids with carbon chain lengths in the range of C10 to C20 are used. Additionally, lipids having mixtures of saturated and unsaturated fatty acid chains can be used. Preferred lipids are 1,2-Dioleoyl-sn-glycero-3-phosphoethanolamine (DOPE), 1,2-distearoyl-sn-glycero-3-phosphocholine (DSPC), 1-palmitoyl-2-oleoyl-sn-glycero-3-phosphocholine (POPC), dipalmitoylphosphatidylcholine (DPPC) or any related phosphatidylcholine.

Further suitable lipids are composed of sphingomyelin, dihydrosphingomyeline, or phospholipids with other head groups, such as serine and inositol as well as sterols, in particular cholesterol and phytosterols.

In one embodiment the further lipid is an ionizable lipid, preferably selected from 1,2-distearoyl-3-dimethylammonium-propane, 1,2-dipalmitoyl-3-dimethylammonium-propane, 1,2-dimyristoyl-3-dimethylammonium-propane, 1,2-dioleoyl-3-dimethylammonium-propane, 1,2-dioleyloxy-3-dimethylaminopropane, (6Z,9Z,28Z,31Z)-heptatriacont-6,9,28,31-tetraene-19-yl 4-(dimethylamino)butanoate, 9-Heptadecanyl 8-{(2-hydroxyethyl)[6-oxo-6-(undecyloxy)hexyl]amino}octanoate, N,N-dimethyl-2,2-di-(9Z,12Z)-9,12-octadecadien-1-yl-1,3-dioxolane-4-ethanamine, [(4-hydroxybutyl)azanediyl]di(hexane-6,1-diyl) bis(2-hexyldecanoate).

In one embodiment the further lipid is an cationic lipid, preferably selected from salts of 1,2-di-O-octadecenyl-3-trimethylammonium propane, 1,2-dioleoyl-3-trimethylammonium-propane, N1-[2-((1S)-1-[(3-aminopropyl)amino]-4-[di(3-amino-propyl)amino]butylcarboxamido)ethyl]-3,4-di[oleyloxy]-benzamide, N4-cholesteryl-spermine, 3β-[N-(N',N'-dimethylaminoethane)-carbamoyl]cholesterol, O,O'-ditetradecanoyl-N-(α-trimethylammonioacetyl)diethanolamine, 1,2-dilauroyl-sn-glycero-3-ethylphosphocholine, 1,2-dimyristoyl-sn-glycero-3-ethylphosphocholine, 1,2-dipalmitoyl-sn-glycero-3-ethylphosphocholine, 1,2-distearoyl-sn-glycero-3-ethylphosphocholine, 1,2-dioleoyl-sn-glycero-3-ethylphosphocholine, 1-palmitoyl-2-oleoyl-sn-glycero-3-ethylphosphocholine, 1,2-dimyristoleoyl-sn-glycero-3-ethylphosphocholine, dimethyldioctadecylammonium, 1,2-dimyristoyl-3-trimethylammonium-propane, 1,2-dipalmitoyl-3-trimethylammonium-propane, 1,2-stearoyl-3-trimethylammonium-propane, N-(4-carboxybenzyl)-N,N-dimethyl-2,3-bis(oleoyloxy)propan-1-aminium and 3β-[N-(N',N'-dimethylaminoethane)-carbamoyl]cholesterol. The salt can be any pharmaceutically acceptable salt and is preferably a fluoride or chloride salt.

Further lipids suitable in the compositions of the present invention include, but are not limited to, phosphatidylglycerol, cardiolipin, diacylphosphatidylserine, diacylphosphatidic acid, N-dodecanoyl phosphatidylethanoloamine, N-succinyl phosphatidylethanolamine, N-glutaryl phosphatidylethanolamine, lysylphosphatidylglycerol, and other anionic modifying groups joined to neutral lipids.

In one embodiment the further lipid is selected from phospholipids, aminolipids, and sphingolipids. Representative phospholipids include sphingomyelin, phosphatidylcholine, phosphatidylethanolamine, phosphatidylserine, phosphatidylinositol, phosphatidic acid, palmitoyloleoyl phosphatidylcholine, lysophosphatidylcholine, lysophosphatidylethanolamine, dipalmitoylphosphatidylcholine, dioleoylphosphatidylcholine, distearoylphosphatidylcholine, or dilinoleoylphosphatidylcholine. Other phosphorus-lacking compounds, such as sphingolipids, glycosphingolipid families, diacylglycerols, and β-acytoxyacids, can also be used. Additionally, such amphipathic lipids can be readily mixed with other lipids, such as triglycerides and sterols.

In one embodiment the further lipid is selected from polysorbate 80 (also known as Tween 80, IUPAC name 2-[2-[3,4-bis(2-hydroxyethoxy)oxolan-2-yl]-2-(2-hydroxyethoxy)ethoxy]ethyloctadec-9-enoate), Myrj52 (Polyoxyethylene (40) stearate), and Brij™ S10 (Polyoxyethylene (10) stearyl ether) or combinations thereof. These lipids are known in the field as stabilizing agents and can be present in the compositions of the present invention in addition to compound (I) of the present invention and any further lipid described herein.

A cryoprotective agent is an agent that protects a composition from experiencing adverse effects upon freezing and thawing. For example, in the present invention, cryoprotective agents such as polyols and/or carbohydrates, among others, may be added to prevent substantial particle agglomeration.

A buffering agent can be included as well. Suitable buffering agents are for example phosphate, acetate, citrate, 4-(2-hydroxyethyl)-1-piperazineethanesulfonic acid, amino acids and other organic compounds; antioxidants including ascorbic acid and methionine.

Additionally, at least one of the following additives can be further present in the composition: preservatives (such as octadecyldimethylbenzyl ammonium chloride; hexamethonium chloride; benzalkonium chloride, benzethonium chloride; phenol, butyl or benzyl alcohol; alkyl parabens such as methyl or propyl paraben; catechol; resorcinol; cyclohexanol; 3-pentanol; and m-cresol); low molecular weight (less than about 10 residues) polypeptides; proteins, such as serum albumin, gelatin, or immunoglobulins; hydrophilic polymers such as polyvinylpyrrolidone; amino acids such as

glycine, glutamine, asparagine, histidine, arginine, or lysine; carbohydrates including monosaccharides, disaccharides, and other sugar compounds like glucose, mannose, or dextrins; chelating agents such as EDTA; sugars such as sucrose, mannitol, trehalose or sorbitol; salt-forming counter-ions such as sodium; metal complexes (e.g., Zn-protein complexes), vehicles, binders, disintegrants, immunological adjuvants like a cell penetrating peptide, for example human lactoferrin protein or a fragment thereof, Tat, Ant, Rev, FHV, HSV-1 protein VP22, C6, C6M1, PF20, NAP, POD, polyarginine, polylysine, PTD-5, Transportan, MAP, TP10, Pep-7, Azurin p18, Azurin p28, hCT18-32, Bac 7, CTP, K5-FGF, HAP-1, 293P-1, KALA, GALA, LAH4-L1, Melittin, Penetratin, EB1, MPG, CADY, Pep4, preferably a human lactoferrin protein or a fragment thereof, fillers (diluents), lubricants, glidants (flow enhancers), compression aids, colors, sweeteners, suspending/dispersing agents, film formers/coatings, flavors, printing inks.

In one embodiment the composition, preferably the lipid nanoparticle, comprises the at least one active agent to the compound of formula (I) in a weight to weight ratio of 1:0.01 to 1:100.

In one embodiment the composition, preferably the lipid nanoparticle, comprises at least one further compound selected from one or more lipids, different from the compound of formula (I); a buffering agent; a pharmaceutically acceptable salt, different from the buffering agent; a cryoprotectant or any combination thereof. In a preferred embodiment the composition, preferably the lipid nanoparticle, further comprises one or more lipids, different from the compound of formula (I), more preferably further comprises one, two or three additional lipids, different from the compound of formula (I). In a preferred embodiment the composition, preferably the lipid nanoparticle, consists of the compound of formula (I), at least one active agent and one or more lipids, different from the compound of formula (I), more preferably one, two or three additional lipids, different from the compound of formula (I).

In one embodiment of the composition, preferably a lipid nanoparticle, the compound of formula (I) is present in a ratio of about 0.1 to about 10 mol%, based on the total lipid content. In one embodiment the compound of formula (I) is present in a ratio of greater than 10 mol%, based on the total lipid content. In one embodiment the compound of formula (I) is present in a ratio of 0.5 mol% to 5 mol%, based on the total lipid content. In some embodiments the compound of formula (I) is present in a ratio of 1.5 mol%.

In one embodiment of the composition, preferably a lipid nanoparticle, where a further lipid, different from the compound of formula (I), is contained and is a cationic lipid, the cationic lipid is preferably present in a ratio of about 10 to about 80 mol%, based on the total lipid content. In one embodiment the cationic lipid is present in a ratio of about 50 mol%, based on the total lipid content.

In one embodiment of the composition, preferably a lipid nanoparticle, where a further lipid, different from the compound of formula (I), is contained and is an ionizable lipid, the ionizable lipid is preferably present in a ratio of about 10 to about 80 mol%, based on the total lipid content. In one embodiment the ionizable lipid is present in a ratio of about 50 mol%, based on the total lipid content.

In one embodiment of the composition, preferably a lipid nanoparticle, where a further lipid, different from the compound of formula (I), is contained and is a structural lipid, also known as "helper lipid", with neutral or negative net charge, the structural lipid is preferably present in a ratio of about 10 to about 40 mol%, based on the total lipid content. In one embodiment the structural lipid is present in a ratio of about 10 mol%, based on the total lipid content.

In one embodiment of the composition, preferably a lipid nanoparticle, where a further lipid, different from the compound of formula (I), is contained and is a sterol such as cholesterol or phytosterols or derivatives thereof, the sterol is preferably present in a ratio of about 10 to about 60 mol%, based on the total lipid content. In one embodiment the sterol is present in a ratio of about 35 to about 41 mol%, based on the total lipid content. In one embodiment the sterol is present in a ratio of about 38.5 mol%%, based on the total lipid content.

In one embodiment of the composition, preferably a lipid nanoparticle, where a further lipid, different from the compound of formula (I), is contained and is a stabilizing agent, the stabilizing agent is preferably present in a ratio of about 0 to about 10 mol%, based on the total lipid content.

In one embodiment of the composition, preferably a lipid nanoparticle, where at least one buffering agent is present, the at least one buffering agent is present in a molar concentration of 0.1 mM to 1000 mM with respect to the total volume of the phase in which the composition is dispersed.

In one embodiment of the composition, preferably a lipid nanoparticle, where at least one cryoprotectant is present, the at least one cryoprotectant is present in a mass concentration of 0.1 wt% to 50 wt% with respect to the total volume of the phase in which the composition is dispersed.

The compositions of the present invention may be formulated into preparations in solid, semisolid, liquid or gaseous forms, such as tablets, capsules, powders, granules, ointments, solutions, suspensions, suppositories, injections, inhalants, gels, microspheres, and aerosols. Typical routes of administering such pharmaceutical compositions include, without limitation, oral, topical, transdermal, inhalation, parenteral, sublingual, buccal, rectal, vaginal, and intranasal. The term parenteral as used herein includes subcutaneous injections, intravenous, intramuscular, intradermal, intracisternal injection or infusion techniques.

Compositions, preferably pharmaceutical compositions of the present invention are formulated so as to allow the active ingredients contained therein to be bioavailable upon administration of the composition to a patient. Compositions that will be administered to a subject or patient in some embodiments take the form of one or more dosage units, where for example, a tablet may be a single dosage unit, and a container of a compound of formula (I) of the present invention in aerosol form may hold a plurality of dosage units. Actual methods of preparing such dosage forms are known, or will be apparent, to those skilled in this art. In some embodiments, the composition to be administered will, in any event, contain a therapeutically effective amount of a compound of formula (I) of the present invention, or a pharmaceutically acceptable salt thereof, for treatment of a disease or condition of interest in accordance with the teachings of this disclosure.

A composition, preferably pharmaceutical composition of the present invention may be in the form of a solid or liquid. In one aspect, the carrier(s) are particulate, so that the compositions are, for example, in tablet or powder form. The carrier(s) may be liquid, with the compositions being, for example, oral syrup, injectable liquid or an aerosol, which is useful in, for example, inhalatory administration.

When intended for oral administration, the composition, preferably pharmaceutical composition of the present invention is preferably in either solid or liquid form, where semisolid, semi-liquid, suspension and gel forms are included within the forms considered herein as either solid or liquid.

As a solid composition for oral administration, the composition, preferably pharmaceutical composition, may be formulated into a powder, granule, compressed tablet, pill, capsule, chewing gum, or wafer. Such a solid composition will typically contain one or more inert diluents or edible carriers. In addition, one or more of the following may be present: binders such as carboxymethylcellulose, ethyl cellulose, microcrystalline cellulose, gum tragacanth or gelatin; excipients such as starch, lactose or dextrins, disintegrating agents such as alginic acid, sodium alginate, Primogel, corn starch and the like; lubricants such as magnesium stearate or Sterotex; glidants such as colloidal silicon dioxide; sweetening agents such as sucrose or saccharin; a flavoring agent such as peppermint, methyl salicylate or orange flavoring; and a coloring agent. When the pharmaceutical composition of some embodiments is in the form of a capsule, for example, a gelatin capsule, it may contain, in addition to materials of the above type, a liquid carrier such as polyethylene glycol or oil.

The composition, preferably pharmaceutical composition, of the present invention may be in the form of a liquid, for example, an elixir, syrup, solution, emulsion or suspension. The liquid may be for oral administration or for delivery by injection, as two examples. When intended for oral administration, preferred composition contain, in addition to a compound of formula (I), one or more of a sweetening agent, preservatives, dye/colorant and flavor enhancer. In a composition intended to be administered by injection, one or more of a surfactant, preservative, wetting agent, dispersing agent, suspending agent, buffer, stabilizer and isotonic agent may be included.

The liquid composition, preferably liquid pharmaceutical compositions of the present invention, whether they be solutions, suspensions or other like form, may include one or more of the following adjuvants: sterile diluents such as water for injection, saline solution, preferably physiological saline, Ringer's solution, isotonic sodium chloride, fixed oils such as synthetic mono or diglycerides which may serve as the solvent or suspending medium, polyethylene glycols, glycerin, propylene glycol or other solvents; antibacterial agents such as benzyl alcohol or methyl paraben; antioxidants such as ascorbic acid or sodium bisulfite; chelating agents such as ethylenediaminetetraacetic acid; buffers such as acetates, citrates or phosphates and agents for the adjustment of tonicity such as sodium chloride or dextrose; agents to act as cryoprotectants such as sucrose or trehalose. The parenteral preparation can be enclosed in ampoules, disposable syringes or multiple dose vials made of glass or plastic. Physiological saline is a preferred adjuvant. An injectable pharmaceutical composition is preferably sterile.

The composition, preferably pharmaceutical composition of the present invention may be intended for topical administration, in which case the carrier may suitably comprise a solution, emulsion, ointment or gel base. The base, for example, may comprise one or more of the following: petrolatum, lanolin, polyethylene glycols, bee wax, mineral oil, diluents such as water and alcohol, and emulsifiers and stabilizers. Thickening agents may be present in a pharmaceutical composition for topical administration. If intended for transdermal administration, the composition may include a transdermal patch or iontophoresis device.

The composition, preferably pharmaceutical composition, of the present invention may be intended for rectal administration, in the form, for example, of a suppository, which will melt in the rectum and release the drug. A composition for rectal administration may contain an oleaginous base as a suitable non-irritating excipient. Such bases include, without limitation, lanolin, cocoa butter and polyethylene glycol.

The composition, preferably pharmaceutical composition, of the present invention may include various materials, which modify the physical form of a solid or liquid dosage unit. For example, the composition may include materials that form a coating shell around the active ingredients. The materials that form the coating shell are typically inert, and may be selected from, for example, sugar, shellac, and other enteric coating agents.

The composition, preferably pharmaceutical composition, of the present invention may consist of dosage units that can be administered as an aerosol. The term aerosol is used to denote a variety of systems ranging from those of colloidal nature to systems consisting of pressurized packages. Delivery may be by a liquefied or compressed gas or by a suitable pump system that dispenses the active ingredients. Aerosols of compounds of formula (I) of the present invention may be delivered in single phase, bi-phasic, or tri-phasic systems in order to deliver the active ingredient(s).

Delivery of the aerosol includes the necessary container, activators, valves, sub-containers, and the like, which together may form a kit.

In one preferred embodiment the composition is a lipid nanoparticle. In particular embodiments, the active agent is encapsulated within an aqueous interior of the lipid nanoparticle. In other embodiments, the active agent is present within one or more lipid layers of the lipid nanoparticle. In other embodiments, the active agent is bound to the exterior or interior lipid surface of a lipid nanoparticle. Lipid nano particles include, but are not limited to, liposomes. As used herein, a liposome is a structure having lipid-containing membranes enclosing an aqueous interior. Liposomes may have one or more lipid membranes. Liposomes can be single-layered, referred to as unilamellar, or multi-layered, referred to as multilamellar. When complexed with nucleic acids, lipid particles may also be lipoplexes, which are composed of cationic lipid bilayers sandwiched between DNA layers.

The lipid nanoparticles of present invention may be formulated as a pharmaceutical composition, e.g., which further comprises a pharmaceutically acceptable diluent, excipient, or carrier, such as physiological saline or phosphate buffer, selected in accordance with the route of administration and standard pharmaceutical practice.

In particular embodiments, lipid nanoparticles of the invention are prepared according to standard techniques and further comprise a pharmaceutically acceptable carrier. Generally, normal saline will be employed as the pharmaceutically acceptable carrier. Other suitable carriers include, e.g., water, buffered water, 0.9% saline, 0.3% glycine, and the like, including glycoproteins for enhanced stability, such as albumin, lipoprotein, globulin, etc. In compositions comprising saline or other salt containing carriers, the carrier is preferably added following lipid particle formation. Thus, after the lipid nanoparticles are formed, the compositions can be diluted into pharmaceutically acceptable carriers such as normal saline.

The resulting pharmaceutical preparations may be sterilized by conventional, well known sterilization techniques. The aqueous solutions can then be packaged for use or filtered under aseptic conditions and lyophilized, the lyophilized preparation being combined with a sterile aqueous solution prior to administration. The compositions may contain pharmaceutically acceptable auxiliary substances as required to approximate physiological conditions, such as pH adjusting and buffering agents, tonicity adjusting agents and the like, for example, sodium acetate, sodium lactate, sodium chloride, potassium chloride, calcium chloride, etc. Additionally, the lipidic suspension may include lipid-protective agents which protect lipids against free-radical and lipid-peroxidative damages on storage. Lipophilic free -radical quenchers, such as $\alpha$-tocopherol and water-soluble iron-specific chelators, such as ferrioxamine, are suitable.

The term "lipid nanoparticle" refers to particles having at least one dimension on the order of nanometers (e.g, 1-1,000 nm) which include one or more of the compounds of formula (I). In some embodiments, lipid nanoparticles comprising at least one compound of formula (I)) are included in a formulation that can be used to deliver a therapeutic agent, such as a nucleic acid (e.g, mRNA) to a target site of interest (e.g, cell, tissue, organ, tumor, and the like). In some embodiments, the lipid nanoparticles comprise a compound of formula (I) and a nucleic acid. In some embodiments, the therapeutic agent, such as a nucleic acid, may be encapsulated in the lipid portion of the lipid nanoparticle or an aqueous space enveloped by some or all of the lipid portion of the lipid nanoparticle, thereby protecting it from enzymatic degradation or other undesirable effects induced by the mechanisms of the host organism or cells, e.g., an adverse immune response.

In various embodiments, the lipid nanoparticles have a mean diameter of from about 30 nm to about 150 nm, from about 40 nm to about 150 nm, from about 50 nm to about 150 nm, from about 60 nm to about 130 nm, from about 70 nm to about 110 nm, from about 70 nm to about 100 nm, from about 80 nm to about 100 nm, from about 90 nm to about 100 nm, from about 70 to about 90 nm, from about 80 nm to about 90 nm, from about 70 nm to about 80 nm, or about 30 nm, 35 nm, 40 nm, 45 nm, 50 nm, 55 nm, 60 nm, 65 nm, 70 nm, 75 nm, 80 nm, 85 nm, 90 nm, 95 nm, 100 nm, 105 nm, 110 nm, 115 nm, 120 nm, 125 nm, 130 nm, 135 nm, 140 nm, 145 nm, or 150 nm, measured via dynamic light scattering preferably according to ISO 22412:2017, whereby the samples were diluted 1:10 in RNAse free water corresponding to an RNA concentration of 5 ng/$\mu$L. Preferably the measurements can be conducted with a Malvern Zetasizer NanoZS.

Some techniques of administration can lead to the systemic delivery of certain active agents, but not others. Systemic delivery means that a useful, preferably therapeutic, amount of an active agent is exposed to most parts of the body. Systemic delivery of lipid nanoparticles can be by any means known in the art including, for example, intravenous, intraarterial, subcutaneous, and intraperitoneal delivery. In some embodiments, systemic delivery of lipid nanoparticles is by intravenous delivery.

"Local delivery" as used herein, refers to delivery of an active agent directly to a target site within an organism. For example, an agent can be locally delivered by direct injection into a disease site such as a tumour, other target site such as a site of inflammation, or a target organ such as the liver, heart, pancreas, kidney, and the like. Local delivery can also include topical applications or localized injection techniques such as intramuscular, subcutaneous, or intradermal injection. Local delivery does not preclude a systemic pharmacological effect.

Compositions of the present invention may also be administered simultaneously with, prior to, or after administration of one or more other active agents. Such combination therapy includes administration of a single pharmaceutical

dosage formulation of a composition of the present invention and one or more additional active agents, as well as administration of the composition of the present invention and each active agent in its own separate pharmaceutical dosage formulation. For example, a composition of the present invention and the other active agent can be administered to the patient together in a single oral dosage composition such as a tablet or capsule, or each agent administered in separate oral dosage formulations. Where separate dosage formulations are used, the compounds of formula (I) of the present invention and one or more additional active agents can be administered at essentially the same time, i.e., concurrently, or at separately staggered times, i.e., sequentially; combination therapy is understood to include all these regimens.

The compositions, preferably pharmaceutical compositions, of the present invention may be prepared by methodology well known in the pharmaceutical art. For example, a pharmaceutical composition intended to be administered by injection can be prepared by combining the lipid nanoparticles of the present invention with sterile, distilled water or other carrier so as to form a dispersion. A surfactant may be added to facilitate the formation of a homogeneous solution or suspension. Surfactants are compounds that non-covalently interact with the compound of the disclosure so as to facilitate dissolution or homogeneous suspension of the compound in the aqueous delivery system.

The compositions of the present invention are administered in a therapeutically effective amount, which will vary depending upon a variety of factors including the activity of the specific therapeutic agent employed; the metabolic stability and length of action of the therapeutic agent; the age, body weight, general health, sex, and diet of the patient; the mode and time of administration; the rate of excretion; the drug combination; the severity of the particular disorder or condition; and the subject undergoing therapy.

In a preferred embodiment the composition of the present invention is a pharmaceutical composition for the treatment of illness in humans. In a further preferred embodiment, the composition of the present invention is a pharmaceutical composition for the treatment of illness in mammals.

In particular the invention refers to a use of a polyoxyalkylene polymer A or a compound of the formula H-O-A-R2 or a compound of the formula H-O-CH2-CH2-O-A-R2 as lipid and a use for the preparation of a lipid particle.

It further refers to the use of a polyoxyalkylene polymer A or a compound of the formula H-O-A-$R^2$ or a compound of the formula H-O-$CH_2$-$CH_2$-O-A-$R^2$ for the preparation of a composition, especially wherein the composition is a pharmaceutical composition.

A further embodiment of the present invention is the use of a polyoxyalkylene polymer A or a compound of the formula H-O-A-$R^2$ or a compound of the formula H-O-$CH_2$-$CH_2$-O-A-$R^2$ or at least one compound of formula (I) as adjuvant or excipient in a pharmaceutical composition. Preferably the polyoxyalkylene polymer A or a compound of the formula H-O-A-$R^2$ or a compound of the formula H-O-$CH_2$-$CH_2$-O-A-$R^2$ or at least one compound of formula (I) is used in a pharmaceutical composition to avoid recognition of an active ingredient by the patient's reticuloendothelial system. The pharmaceutical composition preferably does not comprise polyethylene glycol with a weight average molecular weight of more than 500 g/mol, preferably of more than 200 g/mol.

In a preferred embodiment a polyoxyalkylene polymer A or a compound of the formula H-O-A-$R^2$ or a compound of the formula H-O-$CH_2$-$CH_2$-O-A-$R^2$ or at least one compound of formula (I) is used to encapsulate an active agent.

In one embodiment the present invention refers to the use of a polyoxyalkylene polymer A or a compound of the formula H-O-A-$R^2$ or a compound of the formula H-O-$CH_2$-$CH_2$-O-A-$R^2$ for the preparation of a lipid. In one embodiment the present invention refers to the use of a polyoxyalkylene polymer A or a compound of the formula H-O-A-$R^2$ or a compound of the formula H-O-$CH_2$-$CH_2$-O-A-$R^2$ for the preparation of a nanoparticle.

In one very preferred embodiment of the use according to the present invention the compound is a compound of formula (I),

$R^1{}_nL$-A-$R^2$ (I); wherein $R^1{}_nL$- is

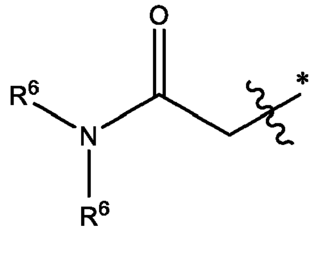

(L1), wherein $R^6$ n-tetradecanyl; and $R^2$ is a 1-methoxy-3-(2-methoxyethoxy)propan-2-oxy group.

In a further very preferred embodiment of the use according to the present invention the compound is a compound of formula (I),

$R^1{}_nL$-A-$R^2$ (I); wherein $R^1{}_nL$ is

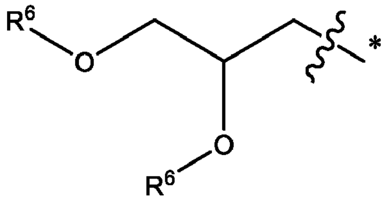

(L2), wherein $R^6$ is n-$C_{13}H_{27}$-CO-; and $R^2$ is a 1-methoxy-3-(2-methoxyethoxy)propan-2-oxy group.

**Examples**

Synthesis of polyoxyalkylene copolymers

Reagents and chemicals

Reagents and chemicals were purchased from TCI (Tokio, Japan), Thermo Fisher Scientific (Waltham, MA, USA), Carl Roth GmbH (Karlsruhe, Germany) and Merck KGaA (Darmstadt, Germany) unless otherwise noted. Ethylene oxide (EO) was obtained from Air Liquide (Paris, France). Tetrahydrofuran (THF) was flashed over basic aluminum oxide before usage. Glycidyl methyl ether (GME) was dried over Calcium hydride ($CaH_2$) and cryo-transferred before polymerization.

Example 1: Synthesis of the glycidyl methyl ether (GME)

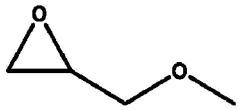

1-Chloro-3-methoxy-propan-2-ol (50.0 g, 401 mmol) was added to a flask equipped with a magnetic stirrer and cooled with an ice bath. Finely grounded sodium hydroxide (NaOH, 20.9 g, 522 mmol) was added in portions under stirring. After complete reaction (TLC control) the crude product was cryo-transferred *in vacuo* from the reaction flask and dried over $CaH_2$ under cooling with an ice bath. After an additional cryo-transfer and filtration step, GME (30.1 g, 85%) was obtained as a colorless liquid.

Example 2: Synthesis of 1-methoxy-3-(2-methoxyethoxy)propan-2-ol

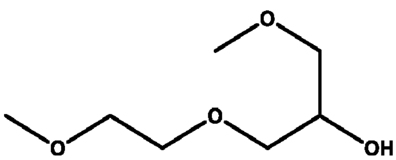

Ethylene glycol monomethyl ether (8.64 g, 9.00 mL, 113 mmol) was added to a flask equipped with a reflux condenser. NaOH solution (19 M, 3 mL) was added under stirring and the resulting solution was heated to 55 °C. GME (5.00 g, 5.10 mL, 56.7 mmol) was added and the solution was stirred overnight. The solution was cooled to room temperature and extracted with dichloromethane (DCM, 50 mL) three times. The combined organic phases were dried over magnesium sulphate ($MgSO_4$). After filtration, the solvent was evaporated under reduced pressure. 1-Methoxy-3-(2-methoxyethoxy)propan-2-ol (3.74 g, 40%) was obtained as a colorless liquid after fractional distillation of the residue.

Example 3: Synthesis of mP($EO_{15}$-*co*-$GME_{15}$) (entry b)

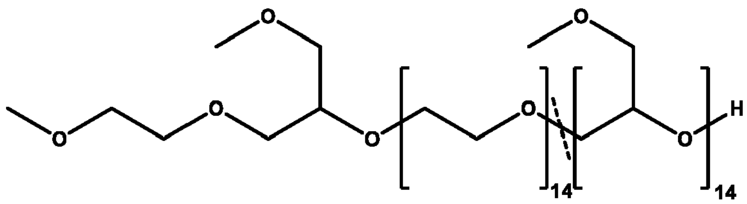

Potassium-*tert*-butoxide (KO*t*Bu, 1.01 g, 8.95 mmol) was dissolved in stabilizer-free THF and small quantities of Millipore water and transferred into a flame-dried and argon-flushed flask equipped with a teflon stopcock and a septum. 1-Methoxy-3-(2-methoxyethoxy)propan-2-ol (1.50 g, 9.14 mmol) was dissolved in benzene and transferred into the flask. High vacuum was applied to the flask and the solvents were removed under high vacuum. The resulting initiator salt was dried under high vacuum at 55 °C overnight. The residue was dissolved in dry dimethyl sulfoxide (DMSO, 86 mL). After freezing the resulting solution at -80 °C, GME (11.3 g, 11.5 mL, 128 mmol) was added to the flask via syringe. EO (5.63 g, 5.81 mL, 128 mmol) was added to the flask via cryo-transfer from a graduated ampoule. The cooling bath was removed, and the reaction mixture was stirred for 2 d at 30 °C under high vacuum with closed stopcock. The solvent was evaporated under high vacuum at 50 °C. Millipore water (100 mL) and acidic ion-exchange resin (DOWEX) (1 g) were added to the residue. The resulting suspension was stirred overnight. The suspension was filtered, and the resulting solution was lyophilized. The residue was dissolved in diethyl ether (400 mL). The resulting suspension was filtered, and the organic phase was dried over $MgSO_4$. After a filtration step, the solvent was evaporated to yield the statistical copolymer mP($EO_{15}$-*co*-$GME_{15}$) (15.2 g, 83%) as a viscous liquid.

Further, mP(EO-co-GME) with varying amounts of the monomers were prepared according to the same procedure (entries a, c and d of Tables 1 and 2).

Example 4: Synthesis of mP($EO_{15}$-*co*-$GME_{15}$)-b-$PEO_2$ (entry e)

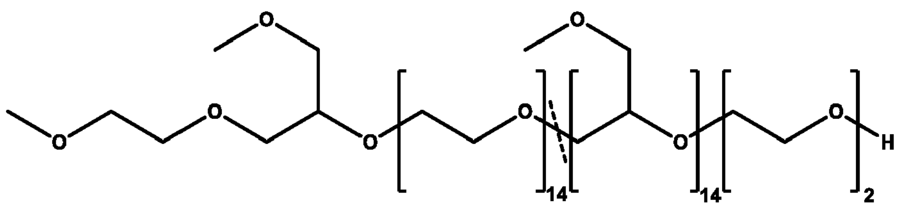

KOtBu (489 mg, 4.36 mmol) was dissolved in stabilizer-free THF and small quantities of Millipore water and transferred into a flame-dried and argon flushed flask equipped with a teflon stopcock and a septum. 1-Methoxy-3-(2-methoxyethoxy)propan-2-ol (730 mg, 4.45 mmol) was dissolved in benzene and transferred into the flask. High vacuum was applied to the flask and the solvents were removed under high vacuum. The resulting initiator salt was dried under high vacuum at 55 °C overnight. The residue was dissolved in dry DMSO (42 mL). After freezing the resulting solution at -80 °C, GME (5.48 g, 5.60 mL, 62.2 mmol) was added to the flask via syringe. EO (2.74 g, 2.83 mL, 62.2 mmol) was added to the flask via cryo-transfer from a graduated ampoule. The cooling bath was removed, and the reaction mixture was stirred for 1 d at 30 °C under high vacuum. The solution was cooled to -80 °C and EO (392 mg, 404 μL, 8.89 mmol) was added to the flask via cryo-transfer from a graduated ampoule. The cooling bath was removed, and the reaction mixture was stirred for 1 d at 30 °C under high vacuum. The solvent was evaporated under high vacuum at 50 °C. Millipore water (100 mL) and acidic ion-exchange resin (DOWEX) (500 mg) were added to the residue. The resulting suspension was stirred overnight. The suspension was filtered, and the resulting solution was lyophilized. The residue was dissolved in diethyl ether (400 mL). The resulting suspension was filtered, and the organic phase was dried over $MgSO_4$. After a filtration step, the solvent was evaporated to yield mP($EO_{15}$-*co*-$GME_{15}$)-b-$PEO_2$ (7.19 g, 77%) as a viscous liquid.

Example 5: Quantification of the ratio of primary and secondary alcohol end groups in polymer sample

Polymer b or e (20 mg) was dissolved in deuterated acetonitrile ($CD_3CN$) (1 mL). Trifluoroacetic anhydride (50 μL) was added, and the resulting solution was shaken for 10 min. 0.6 mL of the solution were transferred to a NMR tube and a $^1H$ NMR spectrum was measured. The ratio of primary to secondary hydroxyl end groups in the polymer sample was determined via quantitative esterification of the hydroxyl end groups with excess of trifluoroacetic anhydride in

$CD_3CN$. The $^1H$ NMR spectrum of polymer b and e after the esterification reaction shows two distinct signals at 5.35 (CHOC(O)) and 4.45 ppm ($CH_2OC(O)$). The ratio of the signal integrals directly correlates with the percentage of primary and secondary hydroxyl end groups in the polymer sample. For polymer b and e the amount of primary hydroxyl end groups in the sample was determined with 47% and 87%, respectively. These results confirm the efficient accumulation of primary hydroxyl groups at the chain end via the EO end capping step of polymer e in Example 4.

Example 6: Synthesis of $mPEO_{46}$ (entry f)

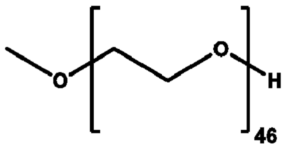

KOtBu (289 mg, 2.57 mmol) was dissolved in stabilizer-free THF and small quantities of Millipore water and transferred into a flame-dried and argon flushed flask equipped with a teflon stopcock and a septum. Triethylene glycol monomethyl ether (431 mg, 2.62 mmol) was dissolved in benzene and transferred into the flask. High vacuum was applied to the flask and the solvents were removed under high vacuum. The resulting initiator salt was dried under high vacuum at 55 °C overnight. The residue was dissolved in dry DMSO (24 mL). After freezing the resulting solution at -80 °C, EO (4.86 g, 5.01 mL, 110 mmol) was added to the flask via cryo-transfer from a graduated ampoule. The cooling bath was removed, and the reaction mixture was stirred for 1 d at 30 °C under high vacuum. The solvent was evaporated under high vacuum at 50 °C. Millipore water (75 mL) and acidic ion-exchange resin (DOWEX) (260 mg) were added to the residue. The resulting suspension was stirred overnight. The suspension was filtered, and the resulting solution was lyophilized. The residue was dissolved in chloroform (350 mL). The resulting suspension was filtered, and the organic phase was dried over $MgSO_4$. After a filtration step, the solvent was evaporated to yield $mPEO_{46}$ (4.04 g, 76%) as a solid. The degree of polymerization (DP) of 46 was determined by $^1H$ NMR spectroscopy.

Table 1: Composition of polymers prepared

| *Entry* (Example) | *Sample* | $DP_{EO,NMR}$ | $DP_{GME,NMR}$ | $mol\%_{EO,NMR}$ | $mol\%_{GME,NMR}$ |
|---|---|---|---|---|---|
| a (3) | mP($EO_{21}$-*co*-$GME_{12}$) | 21 | 12 | 64 | 36 |
| b (3) | mP($EO_{15}$-*co*-$GME_{15}$) | 15 | 15 | 50 | 50 |
| c (3) | mP($EO_{28}$-*co*-$GME_{16}$) | 28 | 16 | 64 | 36 |
| d (3) | mP($EO_{22}$-*co*-$GME_{22}$) | 22 | 22 | 50 | 50 |
| e (4) | mP($EO_{15}$-*co*-$GME_{15}$)-*b*-$PEO_2$ | 17 | 15 | 53 | 47 |
| f (6) | $mPEO_{46}$ | 46 | 0 | 100 | 0 |

*DP* = degree of polymerization

Table 2: Characterization data of polymers prepared

| *Entry* (Example) | *Sample* | $M_{n,MALDI}$ [kg/mol] | $M_{n,SEC}$ [kg/mol] | $PDI_{SEC}$ |
|---|---|---|---|---|
| a (3) | mP($EO_{21}$-*co*-$GME_{12}$) | 2.0 | 1.6 | 1.07 |
| b (3) | mP($EO_{15}$-*co*-$GME_{15}$) | 2.0 | 1.5 | 1.08 |
| c (3) | mP($EO_{28}$-*co*-$GME_{16}$) | 2.6 | 2.0 | 1.07 |
| d (3) | mP($EO_{22}$-*co*-$GME_{22}$) | 2.7 | 2.1 | 1.09 |
| e (4) | mP($EO_{15}$-*co*-$GME_{15}$)-*b*-$PEO_2$ | 2.1 | 1.6 | 1.08 |
| f (5) | $mPEO_{46}$ | 2.0 | 1.7 | 1.06 |

Methods for characterization of polyoxyalkylene copolymers

$^1$H NMR spectra were recorded on a Bruker Avance III HD 300 spectrometer with 300 MHz and referenced internally to residual proton signals of the deuterated solvent.

$M_w$, $M_n$ and dispersities ($M_w/M_n$ = PDI) of all samples were determined from the corresponding size exclusion chromatograms (refractive index (RI) detector, DMF, calibration with PEO standards). Size-exclusion chromatography (SEC) measurements were performed with dimethylformamide (DMF with 1 g/L Lithium bromide (LiBr)) as the mobile phase (flow rate 1 mL/min) on poly(2-hydroxyethylmethacrylat) (PHEMA) 300/100/40 columns at 50 °C. Polymer concentrations were 1 mg/mL. Calibration was carried out using PEO standards (from Polymer Standard Service, Mainz, Germany).

Matrix-assisted laser-desorption-ionization time of flight mass spectroscopy (MALDI-ToF MS) measurements were carried out at a Bruker autoflex maX MALDI-TOF/TOF. The potassium salt of trifluoroacetic acid and trans-2-[3-(4-tert-butylphenyl)-2-methyl-2-propenylidene]malononitrile (DCTB) were used as ionization salt and matrix, respectively.

<u>Synthesis of mP(EO-*co*-GME)-N,N-ditetradecylacetamide</u>

Reagents and chemicals

Reagents and chemicals were purchased from Carl Roth GmbH, Merck KGaA, and Orgentis Chemicals (Gatersleben, Germany) unless otherwise noted. Deionized water was used for all experiments.

Example 7: Oxidation of mP(EO-co-GME) to mP(EO-co-GME)-acetic acid

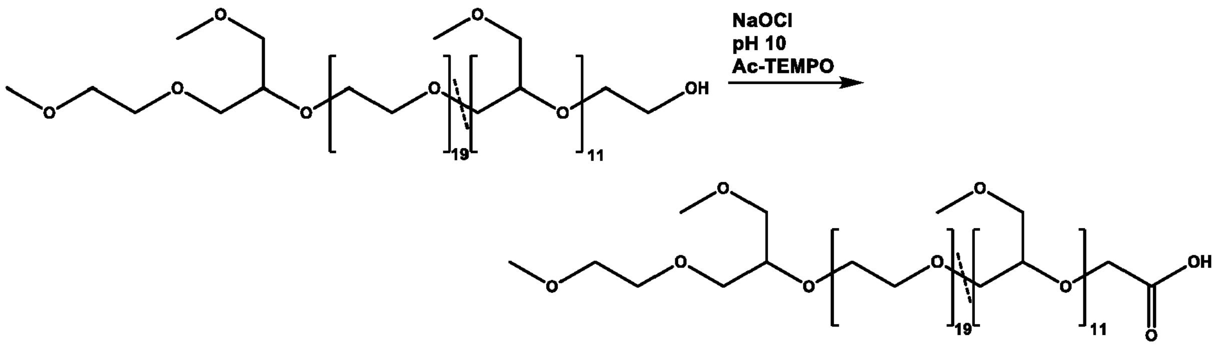


mP($EO_{21}$-*co*-$GME_{12}$) (entry a from Example 3, 7 g, 3.5 mmol) was charged to a round bottom flask. Water (42 mL), sodium carbonate ($Na_2CO_3$, 1 M, 7 mL), sodium bicarbonate ($NaHCO_3$, 1M, 7 mL), Sodium bromide (NaBr, 0.1M, 3.5 mL) and 4-acetamido-2,2,6,6-tetramethylpiperidine-1-oxyl (Ac-TEMPO, 37.3 mg) were added and the reaction mixture was cooled to 0-5°C. Then, bleach (7.5 wt%, 7.2 mL) was added in 4 portions within 1 h and stirred for 1 additional h. Sodium thiosulphate ($Na_2S_2O_3$, 1M, 3.5 mL) was added to quench the reaction. Then, DCM (35 mL) was added, and the pH was adjusted by adding HCl (1M) to pH = 1-3. Organic product phase was separated, and water phase was extracted with DCM (35 mL). DCM-phases were combined and dried over night with $MgSO_4$. After filtration, the organic solvent was removed under vacuum to yield the crude mP($EO_{20}$-*co*-$GME_{12}$)-acetic acid (7.6 g yield) as an oil.

Further, different mP(EO-co-GME)-acetic acid compounds with varying amounts of the monomers were prepared according to the same procedure.

Example 8: Synthesis of mP(EO-co-GME)-N,N-ditetradecylacetamide

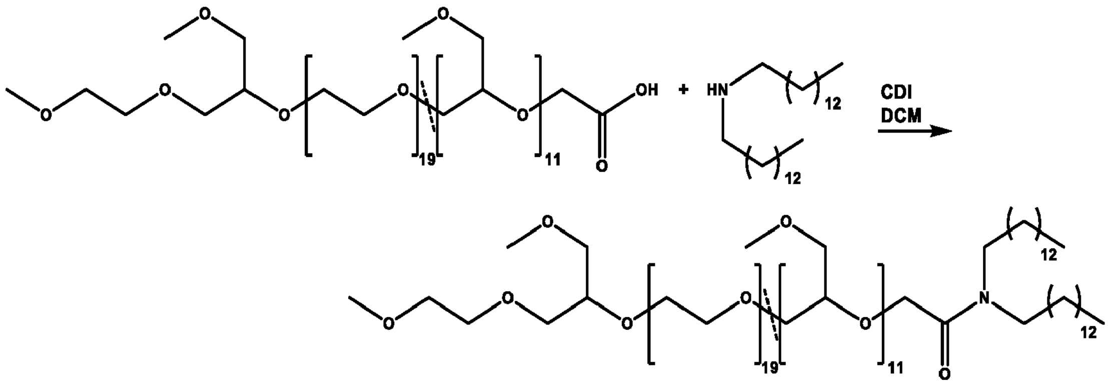


The crude mP($EO_{20}$-*co*-$GME_{12}$)-acetic acid from Example 7 (7 g, 3.5 mmol) was dissolved in DCM (70 mL) at room temperature. Carbonyl diimidazole (CDI, 680 mg, 4.2 mmol) was added to the reaction solution and the reaction mixture was stirred at room temperature for 1-2 h. Then N,N-ditetradecylacetamine (1 g, 3.5 mmol) was added to the reaction and the reaction mixture was stirred at room temperature for additional 16 h. Conversion was quantified by high pressure liquid chromatography (HPLC) equipped with a charged aerosol detector (CAD) in area% (%a). Water was added to the reaction mixture and the biphasic system was stirred for 30 min before phases were separated. Additional DCM (70 mL) was added to the water phase for an additional extraction. The organic phase was concentrated before the product was purified by chromatography. Then, the product containing fractions were pooled and the solvent was removed under vacuum. The desired product mP($EO_{20}$-*co*-$GME_{12}$)-N,N-ditetradecylacetamide (compound g) was isolated in 29% yield. Product was characterized by $^1$H-NMR spectroscopy (Bruker 600 MHz device in $CD_2Cl_2$ at 300 K). Purity was determined by HPLC (99.3%a).

Table 3: Characterization data of mP(EO-co-GME)-N,N-ditetradecylacetamide compounds prepared

| *Entry* (Example) | *Sample* | *Conversion by HPLC/%a* |
|---|---|---|
| g (8) | mP($EO_{20}$-*co*-$GME_{12}$)-N,N-ditetradecylacetamide | 59 |
| h (8) | mP($EO_{14}$-*co*-$GME_{15}$)-N,N-ditetradecylacetamide | 26 |
| i (8) | mP($EO_{27}$-*co*-$GME_{16}$)-N,N-ditetradecylacetamide | 47 |
| j (8) | mP($EO_{21}$-*co*-$GME_{22}$)-N,N-ditetradecylacetamide | 36 |
| k (8) | mP($EO_{15}$-*co*-$GME_{15}$)-b-$PEO_1$)-N,N-ditetradecylacetamide | 77 |
| l (8) | $mPEO_{45}$-N,N-ditetradecylacetamide | 90 |

The improved conversion of compound k can be explained by the different end group fidelity of the precursor compound e compared to a, b, c, and d: For compound e two repetition units of EO were grafted onto the polymer chain end. It was confirmed by $^1$H NMR spectroscopy (Example 4) that this results in an increased amount of polymer chains with primary alcohol chain ends (87% for polymer e vs. 47% for polymer b). Only primary alcohol chain ends are oxidized to carboxylic acid chain ends in the synthesis step of mP(EO-co-GME)-acetic acid (Example 7). A secondary alcohol end-group will react to an ketone chain end, which does not further react in the synthesis step of mP(EO-co-GME)-N,N-ditetradecylacetamide (Example 8). Ketone impurities are removed from the mP(EO-co-GME)-N,N-ditetradecylacetamide product in the column chromatography purification step. Therefore, an increased amount of primary alcohol at the polyoxyalkylene copolymer chain end leads to an increased conversion over the two-step synthesis route of mP(EO-co-GME)-N,N-ditetradecylacetamide. That is why the conversion by HPLC is higher for compound k (77%a) compared to compound h (26%a).

Synthesis of mP(EO-*co*-GME)-$CH_2CH_2$-DMG (1,2-Dimyristoyl-glycerol)

Reagents and Chemicals

DCM, triethylamine ($NEt_3$), sodium sulfate ($Na_2SO_4$), 1M hydrochloric acid (HCl) solution, Py, anhydrous tetrahydrofuran (THF, max. 0.05% $H_2O$), myristic acid chloride (MyCl, 97%), 4-dimethylaminopyridine (DMAP), 1,2-isopropylidene-rac-glycerol (IPG) (97%), KOtBu and acetonitrile (ACN) were obtained from Merck KGaA. p-Toluenesulfonyl

chloride (TsCl) was purchased from TCI Chemicals (Tokio, Japan). Deionized water was used for all experiments.

Example 9: Synthesis of mP($EO_{27}$-*co*-$GME_{16}$)-$CH_2CH_2$-OTs (*p*-Toluenesulfonyl)

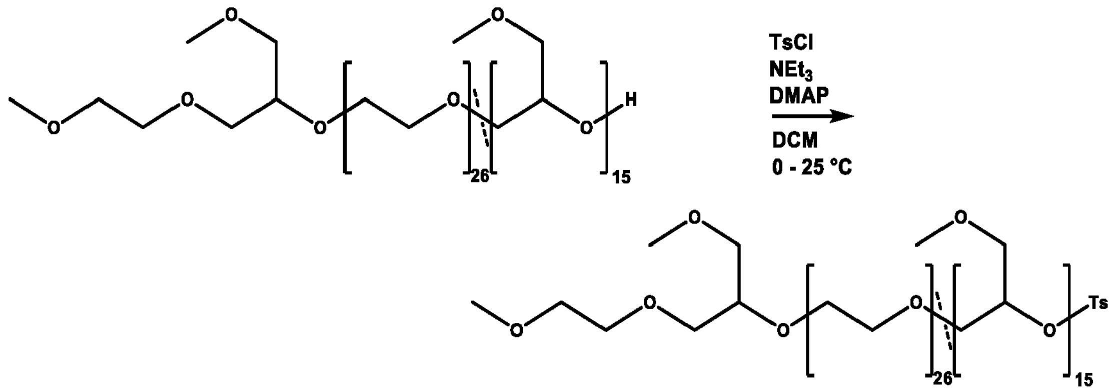


A 50 mL round bottom flask was charged with mP($EO_{28}$-*co*-$GME_{16}$) (2.46 g, 910 μmol, compound c from Example 3) and DCM (2.46 mL) at room temperature. The solution was cooled to 0-5 °C under stirring. Subsequently, DMAP (11.2 mg, 91.7 μmol), $NEt_3$ (166 mg, 1.64 mmol) and p-Toluolsulfonyl chloride TsCl (263 mg, 1.37 mmol) were added successively. The reaction mixture was stirred at 0-5 °C for another 1 h, then heated to 20-25 °C and stirred for 72 h. Conversion was quantified by HPLC. Due to incomplete conversion of the starting material $NEt_3$ (55.3 mg, 546 μmol) and TsCl (87.7 mg, 460 μmol) were added at 20-25 °C and stirring was continued for another 18 h. Then, DCM (22.1 mL) and water (14.8 mL) were added, and the biphasic mixture was stirred vigorously for 5 min. The phases were separated, and the organic layer was mixed with water (4.92 mL) and 1 N HCl solution (0.54 mL). After stirring for 10 min the phases were separated and the organic layer was washed with water (4.92 mL). The organic phase was dried over anhydrous $Na_2SO_4$, filtered, and concentrated on a rotary evaporator with a water bath temperature of 60 °C at a pressure of 700-5 mbar. mP($EO_{27}$-*co*-$GME_{16}$)-$CH_2CH_2$-OTs was isolated as an orange oil (2.14 g, 749 μmol, 82.3% yield). The purity was determined via HPLC (88.7%a).

Example 10: Synthesis of mP($EO_{27}$-*co*-$GME_{16}$)-$CH_2CH_2$-DHG (dihydroxy glycerol)

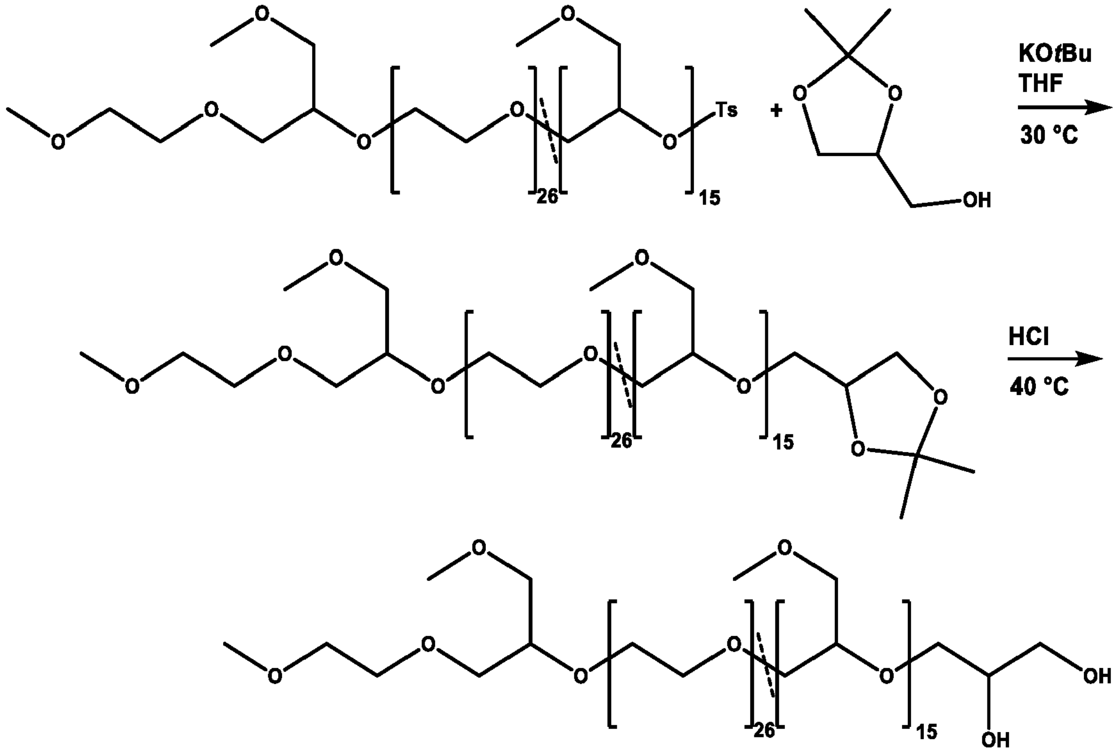


A 50 mL round bottom flask was charged with mP($EO_{27}$-*co*-$GME_{16}$)-$CH_2CH_2$-OTs (1.00 g; 350 µmol; 88.7%a purity) from Example 9, anhydrous THF (4 mL) and heated to 30 °C. In a separate glass vessel IPG (92.6 mg, 700 µmol) and KOtBu (78.6 mg, 700 µmol) were mixed in anhydrous THF (3 mL). The orange suspension was added in portions to the mP($EO_{27}$-*co*-$GME_{16}$)-$CH_2CH_2$-OTs solution and stirring was continued at 30 °C for 6 h. Water (4 mL) was added and THF was removed on a rotary evaporator with a water bath temperature of 60 °C at a pressure of 400-150 mbar. The remaining aqueous solution was extracted with DCM (8 mL) and the organic layer was concentrated on a rotary evaporator with a water bath temperature of 60 °C at a pressure of 700-20 mbar. The intermediate mP($EO_{27}$-*co*-$GME_{16}$)-$CH_2CH_2$-IPG (0.63 g) was isolated as an orange oil.

Subsequently, the mP($EO_{27}$-*co*-$GME_{16}$)-$CH_2CH_2$-IPG intermediate was dissolved in water (6.30 mL) and the pH was adjusted to 1.5-1.6 using 0.1N HCl solution (227 µL). The yellow solution was heated to 40 °C for 75 min, cooled to room temperature and extracted with DCM (2×12.6 mL). The organic phases were combined and concentrated on a rotary evaporator with a water bath temperature of 60 °C at a pressure of 700-5 mbar. mP($EO_{27}$-*co*-$GME_{16}$)-$CH_2CH_2$-DHG (430 mg; 160 µmol) was isolated as an orange oil. The product was analyzed by HPLC.

Example 11: Synthesis of mP($EO_{27}$-*co*-$GME_{16}$)-$CH_2CH_2$-DMG

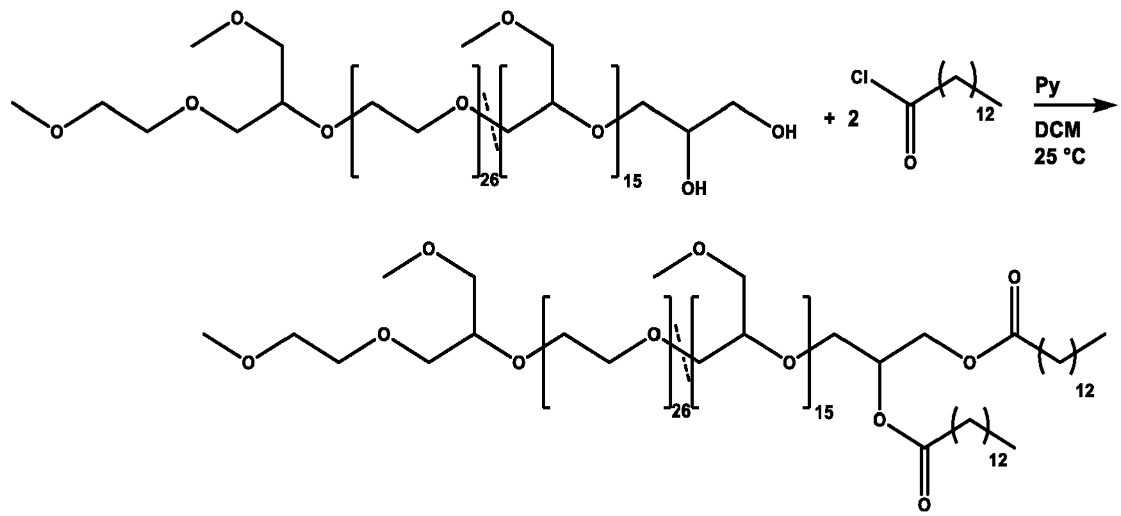


A 50 mL round bottom flask was charged with mP($EO_{27}$-*co*-$GME_{16}$)-$CH_2CH_2$-DHG (430 mg; 160 μmol) from Example 10 and DCM (2.2 mL). The solution was stirred for 5 min under ambient conditions. Py (61.6 mg; 780 μmol) and MyCl (173 mg; 700 μmol) were added in portions and the reaction mixture was stirred at room temperature for 40 h. DCM (3.2 mL) and water (1.7 mL) were added to the crude product mixture, and pH was adjusted to 1.5 using 1M HCl solution (0.15 mL). The DCM phase was separated, washed with water (3.9 mL) and the organic solvent was removed on a rotary evaporator with a water bath temperature of 60 °C at a pressure of 700-5 mbar to yield crude mP($EO_{27}$-*co*-$GME_{16}$)-$CH_2CH_2$-DMG (359 mg) as an oil. For purification the crude product was dissolved in ACN (3.85 mL), heated to 50 °C and filtered. Further purification was carried out by flash column chromatography on a Buchi (Essen, Germany) Pure C-850 FlashPrep system using a 4 g Macherey-Nagel (Düren, Germany) CHROMABOND Flash RS 4 SiOH cartridge (40-63 μm), a ACN to *i*PrOH gradient and a flow rate of 5 mL/min. Product containing fractions were combined and concentrated. Subsequently, the material was purified using a 12 g Buchi FlashPure EcoFlex C18 cartridge (40-60 μm), a ACN/water (1:1) to *i*PrOH gradient, and a flow rate of 20 mL/min. Compound m, mP($EO_{27}$-*co*-$GME_{16}$)-$CH_2CH_2$-DMG (45.6 mg, 14.3 μmol; 8.9%) was isolated as an orange oil. The product was characterized by and $^1$H-NMR spectroscopy and HPLC (purity 67%a).

Lipid Nanoparticle (LNP) preparation and biological evaluation

Materials for LNP preparation and biological assays

CleanCap® Fluc mRNA was obtained from TriLink BioTechnologies (San Diego, CA, USA). D-Lin-MC3-DMA were obtained from MedCHemExpress (Monmouth Junction, NJ, USA), cholesterol and PEO2k-DMG were purchased at Merck KGaA, DSPC was obtained from NOF (White Plains, NY, USA). All cell lines were supplied by German Collection of Microorganisms and Cell Cultures GmbH (DSMZ, Braunschweig, Germany).

Example 12: Preparation of LNPs

An aqueous phase containing 0.133 g/L FLuc mRNA and 11 mM acetic acid was mixed with an ethanolic phase containing 9.43 mM total lipid (50 mol% DLin-MC3-DMA, 38.5 mol% cholesterol, 10 mol% DSPC, 1.5 mol% PEO lipid or mP(EO-co-GME) lipid at a 3:1 volume ratio. The crude LNP colloidal dispersion was dialyzed against phosphate-buffered saline (PBS) for 3 h (3x buffer exchange). Purified LNPs were stored at 4 °C until further use.

Example 13: Determination of mean diameter (z-ave.) and zeta potential (z-pot.) of LNPs

Measurements were conducted with a Zetasizer NanoZS from Malvern Instruments GmbH (Herrenberg, Germany). A DTS 1070 clear disposable folded capillary cell from Malvern Panalytical GmbH (Kassel, Germany) was used. For particle size measurement, samples were diluted 1:10 in RNAse free water corresponding to an RNA concentration of 5 ng/μL. For z-pot. measurement, colloidal LNP dispersions from Example 12 were diluted 1:30 in RNAse free water corresponding to an RNA concentration of 1.67 ng/μL. Z-ave, the width of the fitted Gaussian distribution, which is displayed as the polydispersity index (PDI), as well as the average z-pot. values were calculated from data of at least 10 runs.

Table 4: Size and zeta potential of LNPs

| *Entry (Example)* | *Sample* | *z-ave. /nm* | PDI | z-pot. (before dialysis) /mV | z-pot. (after dialysis) /mV |
|---|---|---|---|---|---|
| g (8) | mP($EO_{20}$-*co*-$GME_{12}$)-N,N-ditetradecylacetamide | 122.8±16.8 | 0.175±0.030 | 48.7±13.5 | -8.8±0.0 |
| h (8) | mP($EO_{14}$-*co*-$GME_{15}$)-N,N-ditetradecylacetamide | 137.1±8.8 | 0.166±0.040 | 43.0±10.7 | -9.9±1.4 |
| i (8) | mP($EO_{27}$-*co*-$GME_{16}$)-N,N-ditetradecylacetamide | 110.2±13.0 | 0.151±0.030 | 52.6±17.0 | -14.3±5.2 |
| j (8) | mP($EO_{21}$-*co*-$GME_{22}$)-N,N-ditetradecylacetamide | 111.0±10.5 | 0.134±0.052 | 47.6±0.6 | -11.4±3.8 |
| l (8) | $mPEO_{45}$-N,N-ditetradecylacetamide | 109.3±6.5 | 0.172±0.071 | 44.9±16.8 | -9.2±3.2 |
| m(11) | mP($EO_{27}$-*co*-$GME_{16}$)-$CH_2CH_2$-DMG | 104.2±1.4 | 0.169±0.005 | 62.8 | -0.154 |
| - | PEO2k-DMG | 102.9±2.7 | 0.219±0.003 | 69.5 | 11.1 |

Example 14: 3-(4,5-dimethylthiazol-2-yl)-5-(3-carboxymethoxyphenyl)-2-(4-sulfophenyl)-2H-tetrazolium (MTS) assay

MTS assay was conducted with HeLa cells. One day before transfection 10,000 cells per well were seeded into a 96-well plate in a volume of 100 μL of the respective medium (containing 10% FBS and 30 μg/mL Gentamicin) and cultured for 24 h at 37 °C and 5% $CO_2$. On day 2, old medium was removed and 90 μL of fresh medium were added to the cells. For polymer testing, compounds from Example 8 were dissolved in sterile water to meet the final concentrations depicted in Table 4, samples were added within a volume of 10 μL. For LNP testing, colloidal LNP dispersions from Example 12 were adjusted to an mRNA concentration of 5-20 ng/μL using ribonucleases free water for dilution. 10 μL of the respective diluted samples were added to the cells equaling an amount of 50-200 ng mRNA per well in a total volume of 100 μL. The cells were further incubated for 24 h at 37 °C and 5% $CO_2$. On day 3, cell viability was determined using CellTiter 96® AQueous Non-Radioactive Cell Proliferation Assay (MTS) according to manufacturer's protocol (Promega GmbH). The absorbance signal (at 400 nm) was quantified with a multiplate reader (Infinite® 200 PRO, Tecan, Männedorf, Switzerland).

Table 5: MTS assay results for mP(EO-co-GME) compounds

| *Entry (Example)* | *Sample* | *Cell Viability/%* | | | | | |
|---|---|---|---|---|---|---|---|
| | | *1000 μg/mL* | *100 μg/mL* | *10 μg/mL* | *1 μg/mL* | *0.1 μg/mL* | *0.01 μg/mL* |
| a (3) | mP ($EO_{21}$-*co*-$GME_{12}$) | 108±4 | 107±6 | 107±4 | 108±4 | 110±1 | 102±2 |
| b (3) | mP ($EO_{15}$-*co*-$GME_{15}$) | 72±6 | 90±9 | 102±12 | 101±7 | 100±11 | 103±4 |
| c (3) | mP ($EO_{28}$-*co*-$GME_{16}$) | 112±4 | 107±2 | 106±4 | 106±1 | 109±3 | 101±3 |
| d (3) | mP ($EO_{22}$-*co*-$GME_{22}$) | 60±14 | 85±11 | 104±6 | 103±5 | 106±8 | 103±2 |
| f (6) | $mPEO_{46}$ | 103±2 | 102±6 | 103±5 | 109±12 | 102±7 | 96±3 |
| - | Untreated Cells | 100 | 100 | 100 | 100 | 100 | 100 |

Table 6: MTS assay results for LNPs

| | | *c(mRNA)/ μg/mL* | | |
|---|---|---|---|---|
| | | *2* | *1* | *0.5* |
| *Entry (Example)* | *Sample* | *Cell Viability/%* | | |
| g (8) | mP($EO_{20}$-co-$GME_{12}$)-N,N-ditetradecylacetamide | 96±2 | 96±2 | 102±2 |
| h (8) | mP($EO_{14}$-co-$GME_{15}$)-N,N-ditetradecylacetamide | 42±2 | 89±5 | 102±2 |
| i (8) | mP($EO_{27}$-co-$GME_{16}$)-N,N-ditetradecylacetamide | 98±2 | 101±1 | 102±1 |
| j (8) | mP($EO_{21}$-co-$GME_{22}$)-N,N-ditetradecylacetamide | 102±2 | 99±2 | 101±2 |
| l (8) | $mPEO_{45}$-N,N-ditetradecylacetamide | 99±2 | 99±2 | 100±1 |
| m(11) | mP($EO_{27}$-co-$GME_{16}$)-$CH_2CH_2$-DMG | 100±2 | 94±1 | 95±2 |
| - | PEO2k-DMG | 88±1 | 97±2 | 95±2 |
| - | Untreated Cells | 100 | 100 | 100 |

Example 15: Characterization of LNPs by agarose gel electrophoresis (AGE)

Colloidal LNP dispersions from Example 12 were characterized by agarose gel electrophoresis. Assay was carried out using the E-Gel™ power snap electrophoresis system by Thermo Fisher Scientific. For the evaluation of the samples a 1% agarose gel with a volume capacity of 20 μL per well was used. Results are summarized in Figs. 1a and 1b. Agarose gel electrophoresis demonstrates full encapsulation of mRNA for all tested LNP compositions (within the detection range of SYBR Safe staining). Thus, LNPs prepared with mP(EO-co-GME) lipids exhibit similar mRNA encapsulation as the reference prepared with conventional PEO lipids.

Example 16: Characterization of LNPs by RiboGreen Assay

Colloidal LNP dispersions from Example 12 were characterized by RiboGreen Assay. The Thermo Fischer Quant-iT™ RiboGreen™ RNA Assay Kit was used. The procedure was performed according to manufacturer's protocol with slight adjustments. Samples were diluted to a theoretical RNA concentration of 0.4 μg/mL using either TE buffer or Triton buffer and added to a 96 well plate at a volume of 100 μL. For dissolution of LNPs in the presence of Triton-buffer the plate was placed into an incubator for 10 minutes at 37 °C and 5% $CO_2$. 100 μL dye solution were added to each well followed by thorough pipetting. Fluorescence signals were measured with the Infinite® 200 PRO microplate reader at an excitation / emission value of 480 / 520 nm. All samples and standards were measured in duplicates.

Table 7: Ribogreen assay results for LNPs

| *Entry (Example)* | *Sample* | RNA encapsulation (%) |
|---|---|---|
| g (8) | mP($EO_{20}$-*co*-$GME_{12}$)-N,N-ditetradecylacetamide | 90.1 |
| h (8) | mP($EO_{14}$-*co*-$GME_{15}$)-N,N-ditetradecylacetamide | 89.9 |
| i (8) | mP($EO_{27}$-*co*-$GME_{16}$)-N,N-ditetradecylacetamide | 83.4 |
| j (8) | mP($EO_{21}$-*co*-$GME_{22}$)-N,N-ditetradecylacetamide | 89.2 |
| l (8) | $mPEO_{45}$-N,N-ditetradecylacetamide | 91.4 |
| m(11) | mP($EO_{27}$-*co*-$GME_{16}$)-$CH_2CH_2$-DMG | 55.9 |
| - | PEO2k-DMG | 56.8 |

Example 17: Determination of transfection efficiency of LNPs by luciferase assay

Luciferase assay was conducted with several immortal cell lines: HeLa, Jurkat, C2C12, HepG2, A549. Cell lines were grown according to standard cell culture conditions.

*Transfection and readout with adherent cells*

One day before transfection 10,000 cells per well were seeded into a 96-well plate in a volume of 100 μL of the respective medium (containing 10% FBS and 30 μg/mL Gentamicin) and cultured for 24 h at 37 °C and 5% $CO_2$.

On day 2, old medium was removed and 90 μL of fresh medium (without FBS and antibiotics) were added to the cells. LNP nanodispersions prepared according to Example 12 were adjusted to an mRNA concentration of 10 ng/μL using ribonucleases free water for dilution. 10 μL of the respective diluted samples were added to the cells equaling an amount of 100 ng mRNA per well in a total volume of 100 μL. After 4 h, old medium containing residual samples was removed and replaced with 100 μL of fresh medium (containing 10% FBS and 30 μg/mL Gentamicin). Cells were further incubated for 20 h at 37 °C and 5% $CO_2$. On day 3, transfection efficiency was determined using Dual-Luciferase® Reporter Assay System (Promega GmbH, Walldorf, Germany). The luminescence signal was quantified with the Infinite® 200 PRO multiplate reader.

*Transfection and readout with suspension cells*

On the day of transfection, 50,000 cells per well were seeded into a 96-well plate in a volume of 90 μL of the respective medium (containing 10% FBS and 30 μg/mL Gentamicin). Samples were adjusted to an mRNA concentration of 10 ng/μL using ribonucleases free water for dilution. 10 μL of the respective diluted samples were added to the cells equaling an amount of 100 ng mRNA per well in a total volume of 100 μL. Cells were further incubated for 24 h at 37 °C and 5% $CO_2$. On day 2, transfection efficiency was determined using Dual-Luciferase® Reporter Assay System (Promega GmbH). The luminescence signal was quantified with the Infinite® 200 PRO multiplate reader.

For all transfection experiments, jetMessenger was used as positive control. Reagents were prepared according to manufacturer's protocols and applied at an equal RNA dose per well as the test samples. Results are summarized in Fig. 2.

Example 18: Determination of immunogenicity of mP(EO-*co*-GME)-N,N-ditetradecylacetamide compounds by competitive enzyme-linked immunosorbent assay (ELISA)

The interaction of lipid samples entry g, h, i, j, l was evaluated by a competitive PEO ELISA kit using a murine monoclonal, horseradish peroxidase conjugated anti PEO antibody (HRP anti-PEO, Life diagnostics, West Chester, PA, USA). Samples of concentrations ranging from 0 to 4600 μg $mL^{-1}$ were prepared in dilution buffer. 50 μL of each prepared sample was dispensed to a PEO pre-coated 96-well plate and 50 μL of HRP anti-PEO was added to each well. The solutions were incubated for 1 h at 25 °C with a micro-plate shaker and then washed six times with 400 μL of wash buffer per each well. After removal of residual droplets, 100 μl of 3,3',5,51 -Tetramethylbiphenyl-4,4'-diamine was added to each well and the solutions were mixed on a micro-plate shaker for 20 min. The reaction was stopped by addition of 100 μL of stop solution and the absorbance at 450 nm was read within 5 min.

Analysis of ELISA Data: The determined absorbance values were normalized to visualize the percent of maximal binding. The sample concentrations were transformed to a function of $log_{10}$. The sigmoidal fits were calculated using the following equation with a representing the upper, b the lower limit, c the inflection point and d the hill slope.

$$y = a + (b-a) / 1 + 10^{(c-x)*d}$$

Fig. 3 shows the ELISA test results of compounds g to j and l. It shows the function of the normalized absorption at a wavelength of 450 nm versus the log10 function of the polymer lipid concentration in nanograms per mL, therefore illustrating the anti-PEO antibody (APA) interaction with the investigated polymer lipids at various concentrations. Interaction of the polymer lipid with the APA reduces the adsorption. The ELISA data shows a strong influence of the methoxy methyl side chains on the interaction of polymer lipid with the APA (it is important to note that the x-axis has a logarithmic scale). With the incorporation of sterically demanding methoxy methyl side groups into the polyether structure, significantly higher polymer lipid concentrations are necessary to observe interactions between the polymer lipid and the APA.

## Claims

1. Use of a polyoxyalkylene polymer A or a compound of the formula H-O-A-$R^2$ or a compound of the formula H-O-$CH_2$-$CH_2$-O-A-$R^2$ for the preparation of a compound having following formula (I)

   $R^1_nL$-A-$R^2$ (I)

   wherein n is 1 or 2;
   $R^1$ are independently from each other selected from saturated or unsaturated with up to three -C=C- bonds, branched or straight-chain $C_3$-$C_{20}$ hydrocarbon groups;

L is a linker unit,
A is a polyoxyalkylene group comprising a unit

(a)

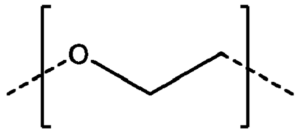

and at least one unit selected from
(b)

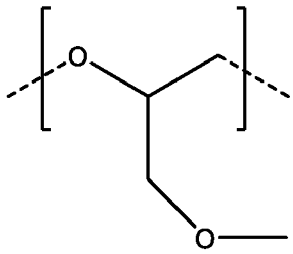

,

(c)

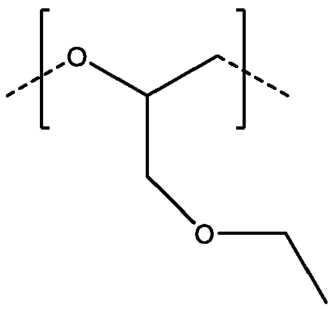

,

(d)

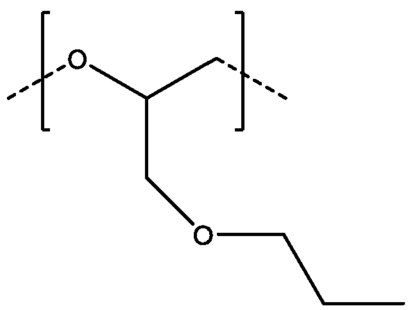

,

, and
(e)

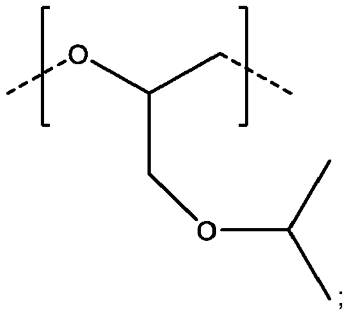

and

$R^2$ is selected from -H; -OH; -SH; $-NH_2$; $-NHR^3$, $-NR^3R^4$, $-OR^5$, $-SR^5$ or linear, branched or cyclic alkyl groups having up to 20 carbon atoms; wherein
$R^3$ to $R^5$ are independently selected from linear, branched or cyclic alkyl groups having up to 20 carbon atoms, in which up to 5 carbon atoms can be replaced by an oxygen or a sulfur atom; and
wherein $-A-R^2$ has a molecular weight of 1100 to 7500 g/mol.

**2.** Use according to claim 1, wherein $R^1$ are independently selected from each other from

i) saturated or unsaturated with up to two -C=C- bonds, branched or straight-chain $C_4$-$C_{20}$ hydrocarbon groups or -H; or
ii) saturated or unsaturated with up to two -C=C- bonds, straight-chain $C_4$-$C_{20}$ hydrocarbon groups or -H; or
iii) saturated or unsaturated with one -C=C- bond, branched or straight-chain $C_4$-$C_{20}$ hydrocarbon groups or -H; or
iv) saturated or unsaturated with one -C=C- bond, straight-chain $C_4$-$C_{20}$ hydrocarbon groups or -H; or
v) saturated branched or straight-chain $C_4$-$C_{20}$ hydrocarbon groups or -H; or
vi) saturated straight-chain $C_4$-$C_{20}$ hydrocarbon groups or -H; or
vii) saturated or unsaturated with up to two -C=C- bonds, branched or straight-chain $C_8$-$C_{18}$ hydrocarbon groups or -H; or
viii) saturated or unsaturated with up to two -C=C- bonds, straight-chain $C_8$-$C_{18}$ hydrocarbon groups or -H; or
ix) saturated or unsaturated with one -C=C- bond, branched or straight-chain $C_8$-$C_{18}$ hydrocarbon groups or -H; or
x) saturated or unsaturated with one -C=C- bond, straight-chain $C_8$-$C_{18}$ hydrocarbon groups or -H; or
xi) saturated branched or straight-chain $C_8$-$C_{18}$ hydrocarbon groups or -H; or
xii) saturated straight-chain $C_8$-$C_{18}$ hydrocarbon groups or -H; or
xiii) saturated or unsaturated with up to two -C=C- bonds, branched or straight-chain $C_{12}$-$C_{17}$ hydrocarbon groups or -H; or
xiv) saturated or unsaturated with up to two -C=C- bonds, straight-chain $C_{12}$-$C_{17}$ hydrocarbon groups or -H; or
xv) saturated or unsaturated with one -C=C- bond, branched or straight-chain $C_{12}$-$C_{17}$ hydrocarbon groups or -H; or
xvi) saturated or unsaturated with one -C=C- bond, straight-chain $C_{12}$-$C_{17}$ hydrocarbon groups or -H; or
xvii) saturated branched or straight-chain $C_{12}$-$C_{17}$ hydrocarbon groups or -H; or
xviii) saturated straight-chain $C_{12}$-$C_{17}$ hydrocarbon groups or -H; or
xix) saturated straight-chain $C_{12}$-$C_{14}$ hydrocarbon groups or -H.

**3.** Use according to claim 1 or 2, wherein n is 2.

**4.** Use according to claim 1 or 2, wherein $R^1{}_nL$- is selected from the group consisting of

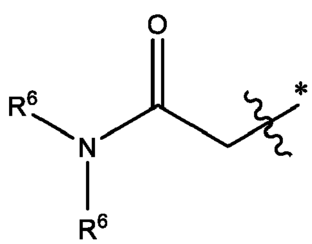

(L1),

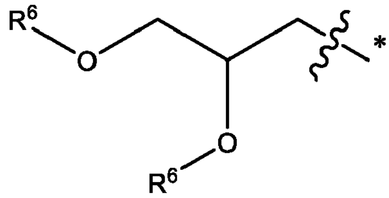

(L2),

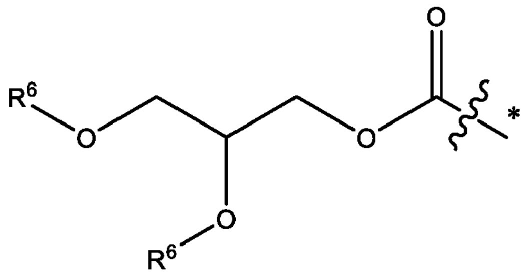

(L3),

wherein in (L1) to (L3) R6 is - H or R1 and at least one R6 is R1,

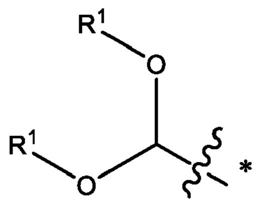

(L4),

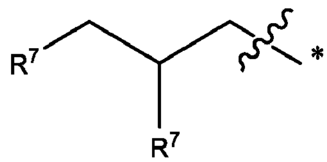

(L5),

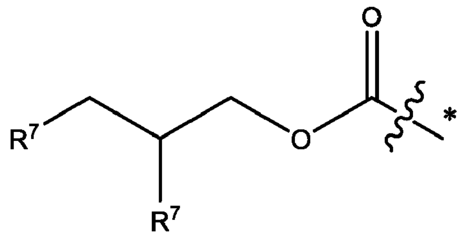

(L6),

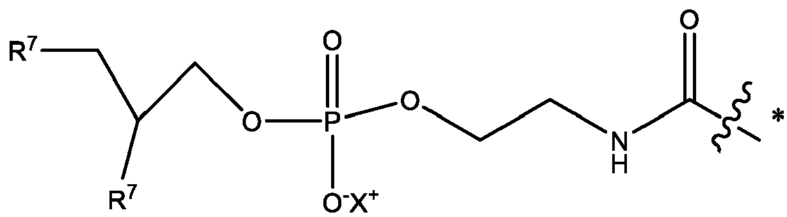

(L7),

wherein in (L5) to (L7) $R^7$ is -H, -OH or $R^1COO$- and at least one $R^7$ is $R^1COO$-, and in (L7) $X^+$ is an alkali metal cation;

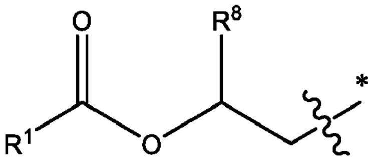 (L8), 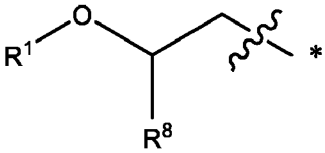 (L9),

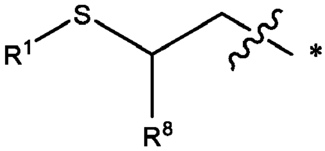 (L10),

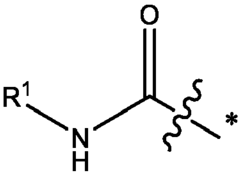 (L11), 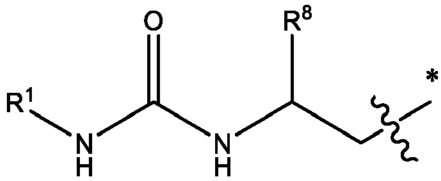 (L12),

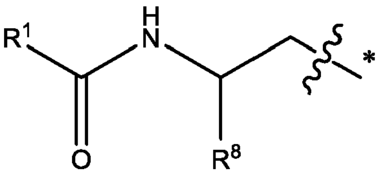 (L13), 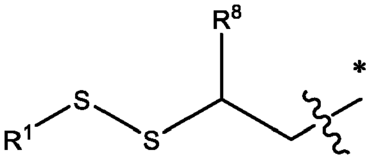 (L14),

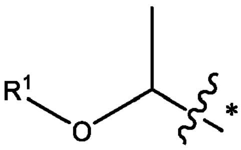 (L15), 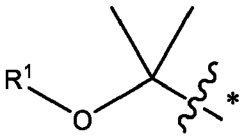 (L16),

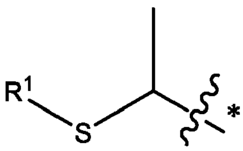 (L17), 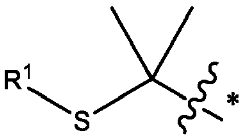 (L18),

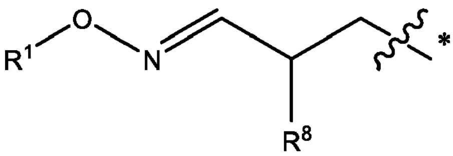 (L19), 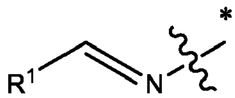 (L20),

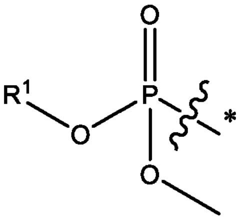 (L21), and 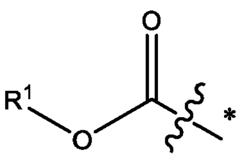 (L22),

wherein $R^8$ is -H, -$CH_2OC_{1-20}$ hydrocarbon group with up to 3 unsaturated double bonds, preferably $R^8$ is selected from the group consisting of -H, methoxymethyl, ethoxymethyl, n-propoxymethyl and iso-propoxymethyl,
and wherein in (L1) to (L22) the bond marked with * is bound to a terminal oxygen atom of the polyoxyalkylene group A.

**5.** Use according to any one of the preceding claims, wherein $R^1{}_nL$- is

i) selected from (L1), (L5) or (L7), wherein in (L5) and (L7) both residues $R^7$ are $R^1COO$- and in (L7) $X^+$ is sodium or potassium; or
ii) selected from (L1) or (L5), wherein in (L5) both residues $R^7$ are $R^1COO$-; or
iii) is (L1); or
iv) is (L5), wherein in (L5) both residues $R^7$ are $R^1COO$-.

**6.** Use according to any one of the preceding claims, wherein $R^2$ is -$OR^5$, wherein $R^5$ is selected from linear, branched or cyclic alkyl groups having up to 20 carbon atoms, in which up to 5 carbon atoms may be replaced by an oxygen atom; preferably $R^2$ is selected from methoxy, ethoxy, propoxy, butoxy, pentoxy, hexoxy, heptoxy, octoxy, nonoxy, decanoxy, 2-ethylhexoxy, dodecan-1-oxy, 1-methoxy-3-(2-methoxyethoxy)propan-2-oxy, 1-octadecanoxy, 3-methylbutan-1-oxy, phenylmethanoxy, 3-ethyl-butoxy, and 2,3-dialkoxypropoxy, 1-methoxy-3-(2-methoxyethoxy)propoxy.

**7.** Use according to any one of the preceding claims, wherein -A-$R^2$ has a molecular weight of 1500 to 3500 g/mol.

**8.** Use of a polyoxyalkylene polymer A or a compound of the formula H-O-A-$R^2$ or a compound of the formula H-O-$CH_2$-$CH_2$-O-A-$R^2$ for the preparation of a composition comprising at least one compound of formula (I) according to any one of claims 1 to 7 and at least one active agent.

**9.** The use of claim 8, wherein the at least one active agent is selected from the group consisting of proteins, peptides, carbohydrates, nucleic acids and nucleic acid analogues, organic molecules having a molecular weight up to 1000 g/mol and combinations thereof.

**10.** The use of claims 8 or 9, wherein the at least one active agent is selected from the group consisting of linear or circular DNA, plasmid DNA (pDNA), self-amplifying RNA (saRNA), chemically modified or unmodified messenger RNA (mRNA), circular RNA (circRNA) comprising at least one coding sequence; small hairpin RNA (shRNA), small interfering RNA (siRNA), microRNA (miRNA), dicer substrate RNA, antisense oligonucleotide (ASO), transfer RNA (tRNA), single guide RNA (sgRNA) or viral RNA (vRNA); and combinations thereof.

**11.** The use according to any one of claims 8 to 10, the composition further comprising a compound selected from a lipid, different from the compound of formula (I); a buffering agent; a pharmaceutically acceptable salt, different from the buffering agent; a cryoprotectant or any combination thereof.

**12.** The use according to any one of claims 8 to 11 wherein the composition is a lipid nanoparticle.

**13.** The use according to anyone of claims 1 to 7, wherein the compound of formula (I)is prepared by a method

a) comprising or consisting of the steps:

i) providing a precursor compound selected from the group consisting of H-O-A-$R^2$ and H-O-$CH_2$-$CH_2$-O-A-$R^2$, wherein A and $R^2$ are as defined in formula (I), and
ii) replacing -H of the hydroxyl group of H-O-A-$R^2$ or H-O-$CH_2$-$CH_2$-O-A-$R^2$, respectively, by a group that forms together with the oxygen atom, -H is bound to, a leaving group -X, which is able to undergo a substitution reaction; and
iii) thereafter performing a substitution reaction with H-$LR^1{}_n$ to substitute -X with -$LR^1{}_n$, wherein L, n and $R^1$ are as defined as in formula (I);
or

b) comprising or consisting of the steps:

i) providing a precursor compound selected from the group consisting of H-O-A-$R^2$ and H-O-$CH_2$-$CH_2$-O-

A-$R^2$, wherein A and $R^2$ are as defined as in formula (I), and
ii) replacing -H of the hydroxyl group of H-O-A-$R^2$ or H-O-$CH_2$-$CH_2$-O-A-$R^2$, respectively, by a group that forms together with the oxygen atom, -H is bound to, a leaving group -X, which is able to undergo a substitution reaction; and
iii) thereafter performing a substitution reaction with H-L to substitute -X with -L, wherein L is as defined as in formula (I) and L comprises one or two groups selected from the group consisting of hydroxyl group and carboxyl group, and
iv) L is subsequently further chemically modified by an esterification reaction with the hydroxyl group(s) and/or carboxyl group(s) to introduce -$R^1$; under formation of an ester bond;
or

c) comprising or consisting of the steps:

i) providing a precursor compound H-O-$CH_2$-$CH_2$-O-A-$R^2$, wherein A and $R^2$ are as defined as in formula (I), and
ii) oxidizing the precursor, in order to form a compound HOOC-$CH_2$-O-A-$R^2$;
iii) thereafter performing an esterification reaction, and preferably a condensation reaction with H-L$R^1{}_n$, wherein L, n and $R^1$ are as defined in formula (I);
or

d) comprising or consisting of the steps:

i) providing a precursor compound H-O-$CH_2$-$CH_2$-O-A-$R^2$, wherein A and $R^2$ are as defined in formula (I), and
ii) oxidizing the precursor, in order to form a compound HOOC-$CH_2$-O-A-$R^2$;
iii) thereafter performing an esterification reaction and preferably a condensation reaction with H-L, wherein L is as defined in formula (I), and L in H-L comprises one or two groups selected from the group consisting of hydroxyl group and carboxyl group;
iv) L is subsequently further chemically modified by an esterification reaction with the hydroxyl group and carboxyl group to introduce -$R^1$.

**14.** Use of any of claim 8 to 11, wherein the composition is produced by a method, comprising the steps of providing at least one compound of formula (I) according to any one of claims 1 to 7, at least one active agent and optionally further ingredients; and combining all ingredient to obtain a composition of any of claims 8 to 11.

**15.** Use of a polyoxyalkylene polymer A or a compound of the formula H-O-A-$R^2$ or a compound of the formula H-O-$CH_2$-$CH_2$-O-A-$R^2$ for the preparation of a lipid.

**16.** Use of a polyoxyalkylene polymer A or a compound of the formula H-O-A-$R^2$ or a compound of the formula H-O-$CH_2$-$CH_2$-O-A-$R^2$ for the preparation of a nanoparticle.

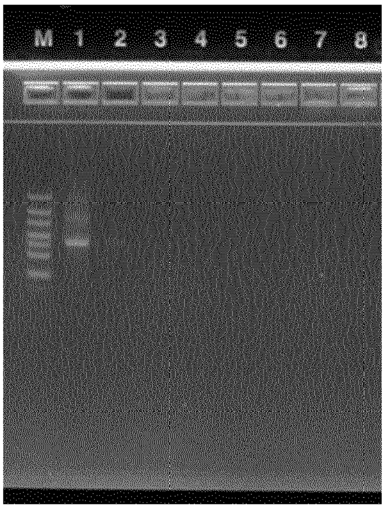
M 1 2 3 4 5 6 7 8

Fig. 1a

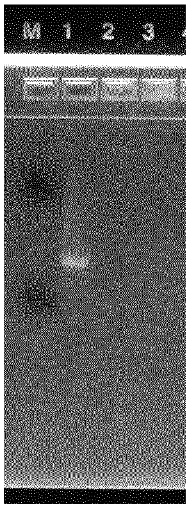
M 1 2 3

Fig. 1b

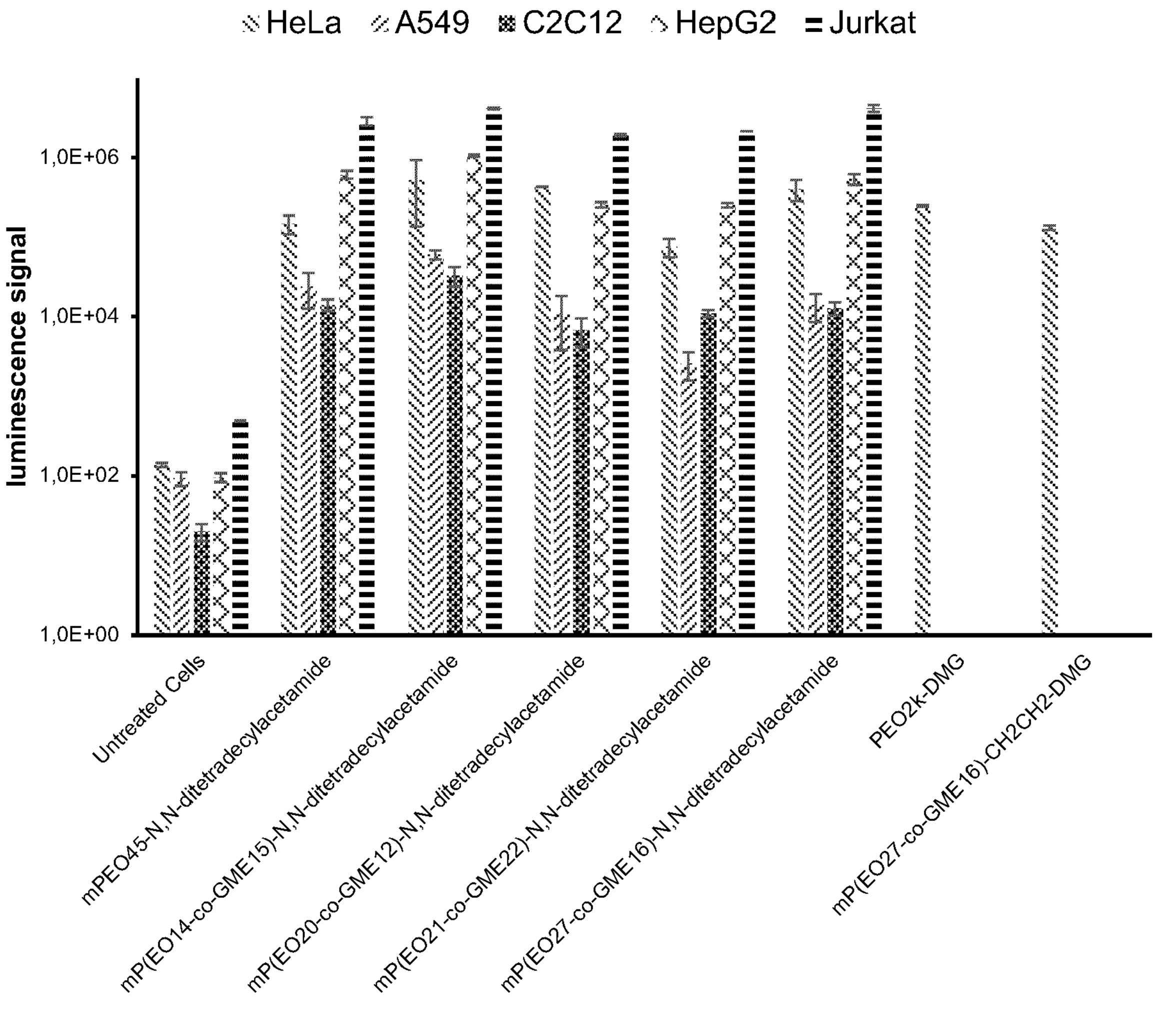
HeLa
A549
C2C12
HepG2
Jurkat
luminescence signal
1,0E+06
1,0E+04
1,0E+02
1,0E+00
Untreated Cells
mPEO45-N,N-ditetradecylacetamide
mP(EO14-co-GME15)-N,N-ditetradecylacetamide
mP(EO20-co-GME12)-N,N-ditetradecylacetamide
mP(EO21-co-GME22)-N,N-ditetradecylacetamide
mP(EO27-co-GME16)-N,N-ditetradecylacetamide
PEO2k-DMG
mP(EO27-co-GME16)-CH2CH2-DMG

Fig. 2

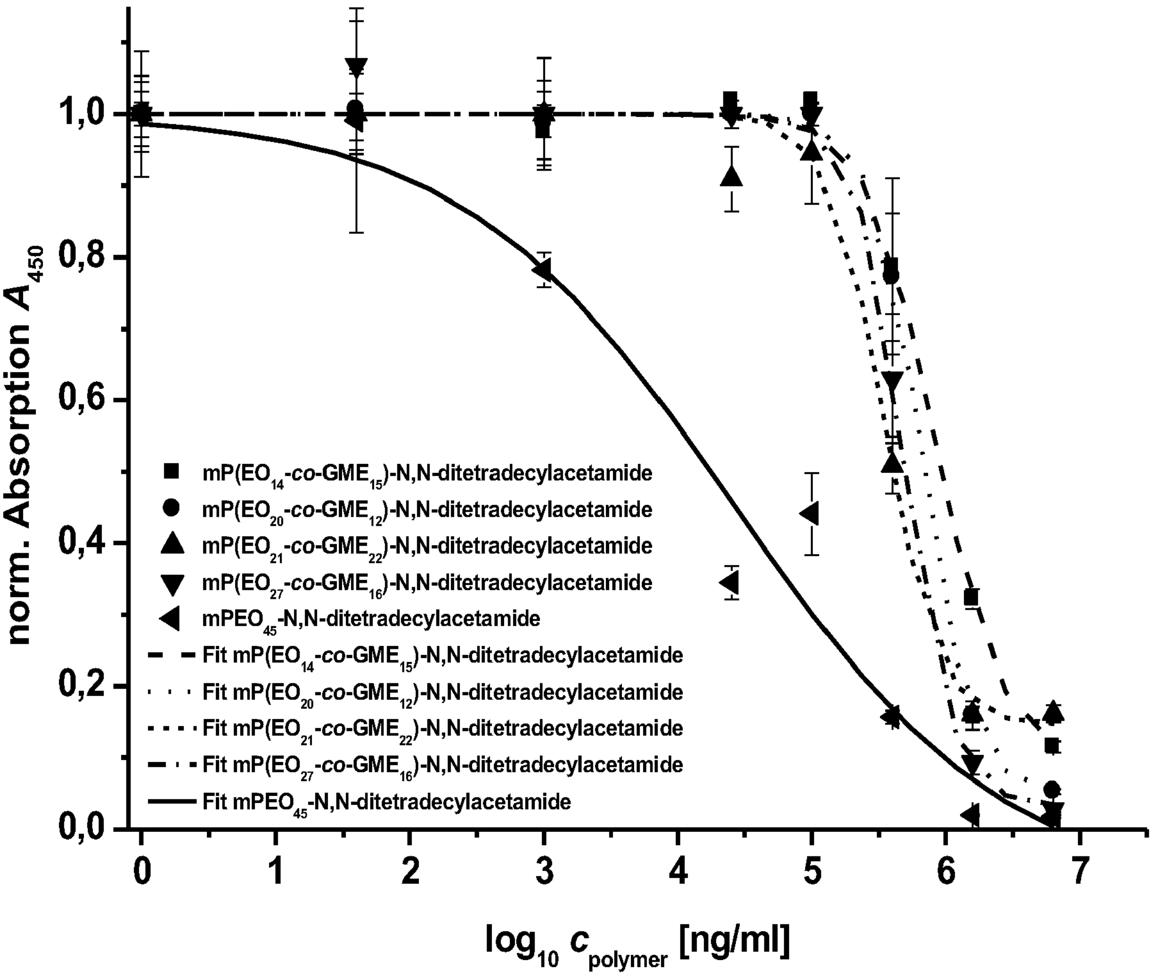

1,0
0,8
0,6
0,4
0,2
0,0
norm. Absorption $A_{450}$
0
1
2
3
4
5
6
7
$\log_{10} c_{polymer}$ [ng/ml]
mP($EO_{14}$-*co*-$GME_{15}$)-N,N-ditetradecylacetamide
mP($EO_{20}$-*co*-$GME_{12}$)-N,N-ditetradecylacetamide
mP($EO_{21}$-*co*-$GME_{22}$)-N,N-ditetradecylacetamide
mP($EO_{27}$-*co*-$GME_{16}$)-N,N-ditetradecylacetamide
$mPEO_{45}$-N,N-ditetradecylacetamide
Fit mP($EO_{14}$-*co*-$GME_{15}$)-N,N-ditetradecylacetamide
Fit mP($EO_{20}$-*co*-$GME_{12}$)-N,N-ditetradecylacetamide
Fit mP($EO_{21}$-*co*-$GME_{22}$)-N,N-ditetradecylacetamide
Fit mP($EO_{27}$-*co*-$GME_{16}$)-N,N-ditetradecylacetamide
Fit $mPEO_{45}$-N,N-ditetradecylacetamide


Fig. 3

Europäisches Patentamt
European Patent Office
Office européen des brevets

# EUROPEAN SEARCH REPORT

Application Number
EP 22 20 7591

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | JP S62 286033 A (KONISHIROKU PHOTO IND) 11 December 1987 (1987-12-11)<br>* claim 1 *<br>* formula 2-5 *<br>----- | 1-16 | INV.<br>C08G65/26<br>C08G65/333 |
| A | WO 2011/075656 A1 (UNIV BRITISH COLUMBIA [CA]; ALNYLAM PHARMACEUTICALS INC [US] ET AL.) 23 June 2011 (2011-06-23)<br>* claims 1-34 *<br>* paragraph [0484] *<br>* paragraph [0506] *<br>----- | 1-16 | |

TECHNICAL FIELDS SEARCHED (IPC)

C08G

The present search report has been drawn up for all claims

1

| Place of search | Date of completion of the search | Examiner |
|---|---|---|
| The Hague | 31 March 2023 | Mensah, Laure |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.......................................................................
& : member of the same patent family, corresponding document

EPO FORM 1503 03.82 (P04C01)

# ANNEX TO THE EUROPEAN SEARCH REPORT ON EUROPEAN PATENT APPLICATION NO.

EP 22 20 7591

This annex lists the patent family members relating to the patent documents cited in the above-mentioned European search report. The members are as contained in the European Patent Office EDP file on
The European Patent Office is in no way liable for these particulars which are merely given for the purpose of information.

31-03-2023

| Patent document cited in search report | Publication date | Patent family member(s) | Publication date |
|---|---|---|---|
| JP S62286033 A | 11-12-1987 | NONE | |
| WO 2011075656 A1 | 23-06-2011 | AU 2010330814 A1 | 12-07-2012 |
| | | AU 2017202156 A1 | 20-04-2017 |
| | | AU 2019200546 A1 | 14-02-2019 |
| | | CA 2784568 A1 | 23-06-2011 |
| | | EP 2512449 A1 | 24-10-2012 |
| | | EP 3494963 A1 | 12-06-2019 |
| | | ES 2749426 T3 | 20-03-2020 |
| | | NZ 600725 A | 28-08-2015 |
| | | US 2013017223 A1 | 17-01-2013 |
| | | US 2016317676 A1 | 03-11-2016 |
| | | WO 2011075656 A1 | 23-06-2011 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2022062896 W
- US 20120251618 A


### Non-patent literature cited in the description


- **FRISCH.** *Bioconjugate Chemistry,* 2004, vol. 15 (4), 754-764
- **J. SELVA et al.** *ACS Nano,* 2022, vol. 16 (8), 11769-11780